# EUROPEAN PATENT SPECIFICATION

(11) **EP 2 379 666 B1**
(45) Date of publication and mention of the grant of the patent: **23.03.2016**
(21) Application number: 09752961.4
(22) Date of filing: 06.11.2009
(51) Int. Cl.: C09J 7/02, B32B 7/06, B32B 7/12, B32B 27/30, C09J 133/08, C08K 3/36, C08K 5/3412

(54) **ADHESIVE TAPE AND ARTICLES COMPRISING STRETCH RELEASABLE PRESSURE-SENSITIVE ADHESIVE**
KLEBEBAND UND ARTIKELN DIE DURCH DEHNUNG LÖSBARE HAFTKLEBER ENTHALTEN
RUBAN ADHÉSIF ET ARTICLES A BASE D'ADHÉSIFS SENSIBLES À LA PRESSION DÉCOLLABLES PAR ÉTIREMENT

(30) Priority: 31.12.2008 US 141795 P
(43) Date of publication of application: 26.10.2011
(73) Proprietor: 3M Innovative Properties Company, Saint Paul, MN 55133-3427 (US)
(72) Inventor: BRIES, James L., Saint Paul, Minnesota 55133-3427 (US); SCHULTZ, Kimberly C. M., Saint Paul, Minnesota 55133-3427 (US); MOORE, Cheryl L., Saint Paul, Minnesota 55133-3427 (US); SETH, Jayshree, Saint Paul, Minnesota 55133-342 (US)
(74) Representative: Isarpatent
(86) International application number: PCT/US2009/063563
(87) International publication number: WO 2010/077435

(56) References cited:
- WO-A1-2006/065373
- WO-A1-2008/100713
- WO-A1-2008/100755
- WO-A2-2005/059055
- US-A1- 2006 127 666

## Description

### Technical Field

An adhesive tape that is stretch releasable and that contains the pressure-sensitive adhesive, articles that include the adhesive tape or a layer of the pressure-sensitive adhesive, methods of making the adhesive tape, and uses of the adhesive tape are described.

### Background

Stretch releasable adhesive tapes have been used to bond an article to a substrate. The article is often a hook, clamp, hanger, or caddie and the substrate is often the surface of a wall. The article can be released from the substrate by stretching the adhesive tape.

WO 2005/0509055 discloses stretch releasable, pressure sensitive adhesive tapes, which are removable from adherends based on vinyl chloride containing plasticizer. The adhesive layer includes a mixture of a styrene-based copolymer and a basic component that is an acrylate-based polymer having N-containing groups.

### Summary

An adhesive tape that contains a pressure-sensitive adhesive is described. The pressure-sensitive adhesive includes a crosslinked acrylic copolymer and inorganic particles suspended or dispersed in the crosslinked acrylic copolymer. The pressure-sensitive adhesive and the adhesive tape can be removed by stretching after being adhered to a substrate. Upon removal from the substrate, little or no adhesive residue typically remains on the substrate.

The pressure-sensitive adhesive contains 1) an acrylic copolymer and 2) inorganic particles dispersed or suspended in the acrylic copolymer. The acrylic copolymer is a crosslinked reaction product of a curable composition that includes a) an acrylic precursor and b) a crosslinker having at least two aziridinyl groups. The acrylic precursor is an at least partially polymerized reaction product of i) a monovalent monomer mixture and ii) a thermal initiator for a free radical polymerization reaction. The monovalent monomer mixture contains (1) a polar monomer having an acidic group or a salt thereof and (2) at least one alkyl (meth)acrylate with an alkyl group having at least 4 carbon atoms.

An adhesive tape is provided. The adhesive tape contains a backing layer and at least one pressure-sensitive adhesive layer positioned adjacent to a major surface of the backing layer. The at least one pressure-sensitive adhesive layer contains 1) an acrylic copolymer and 2) inorganic particles dispersed or suspended in the acrylic copolymer. The acrylic copolymer is a crosslinked reaction product of a curable composition that contains a) an acrylic precursor and b) a crosslinker having at least two aziridinyl groups. The acrylic precursor is an at least partially polymerized reaction product of i) a monovalent monomer mixture and ii) a thermal initiator for a free radical polymerization reaction. The monovalent monomer mixture contains (1) a polar monomer having an acidic group or a salt thereof and (2) at least one alkyl (meth)acrylate with an alkyl group having at least 4 carbon atoms. The adhesive tape is stretchable at least 50 percent in a first direction without breaking.

An article is provided. In a first embodiment, the article includes a first substrate and an adhesive tape adhered to the first substrate. The adhesive tape includes A) a backing layer, B) a pressure-sensitive adhesive layer that is adjacent to a first major surface of the backing layer, and C) a tab that extends beyond the first substrate. Pulling the tab stretches the adhesive tape and releases the adhesive tape from the first substrate. The adhesive tape is stretchable at least 50 percent in a first direction without breaking. The pressure-sensitive adhesive layer contains 1) an acrylic copolymer and 2) inorganic particles dispersed or suspended in the acrylic copolymer. The acrylic copolymer is a crosslinked reaction product of a curable composition that contains a) an acrylic precursor and b) a crosslinker having at least two aziridinyl groups. The acrylic precursor is an at least partially polymerized reaction product of i) a monovalent monomer mixture and ii) a thermal initiator for a free radical polymerization reaction. The monovalent monomer mixture contains (1) a polar monomer having an acidic group or a salt thereof and (2) at least one alkyl (meth)acrylate with an alkyl group having at least 4 carbon atoms.

In a second embodiment, the article includes a first substrate, a second substrate, and a pressure-sensitive adhesive layer that is positioned between the first substrate and the second substrate. The pressure-sensitive adhesive layer couples the first substrate to the second substrate. The pressure-sensitive adhesive layer has a tab that extends beyond at least one of the first substrate and the second substrate. Pulling the tab stretches the pressure-sensitive adhesive layer and releases the pressure-sensitive adhesive from the first substrate, from the second substrate, or from both the first substrate and the second substrate. The pressure-sensitive adhesive layer is stretchable at least 50 percent in a first direction without breaking. The pressure-sensitive adhesive layer contains 1) an acrylic copolymer and 2) inorganic particles dispersed or suspended in the acrylic copolymer. The acrylic copolymer is a crosslinked reaction product of a curable composition that contains a) an acrylic precursor and b) a crosslinker having at least two aziridinyl groups. The acrylic precursor is an at least partially polymerized reaction product of i) a monovalent monomer mixture and ii) a thermal initiator for a free radical polymerization reaction. The monovalent monomer mixture contains (1) a polar monomer having an acidic group or a salt thereof and (2) at least one alkyl (meth)acrylate with an alkyl group having at least 4 carbon atoms.

The article includes a first substrate, a second substrate, and an adhesive tape that is positioned between the first substrate and the second substrate. The adhesive tape couples the first substrate to the second substrate. The adhesive tape includes A) a backing layer, B) a first pressure-sensitive adhesive layer that is adjacent to a first major surface of the backing layer and a second pressure-sensitive adhesive layer that is adjacent to a second major surface of the backing layer, and C) a tab that extends beyond at least one of the first substrate and the second substrate. Pulling the tab stretches the adhesive tape and releases the adhesive tape from the first substrate, from the second substrate, or from both the first substrate and the second substrate. The adhesive tape is stretchable at least 50 percent in a first direction without breaking. The first pressure-sensitive adhesive layer and the second pressure-sensitive adhesive layer each contains 1) an acrylic copolymer and 2) inorganic particles dispersed or suspended in the acrylic copolymer. The acrylic copolymer is a crosslinked reaction product of a curable composition that contains a) an acrylic precursor and b) a crosslinker having at least two aziridinyl groups. The acrylic precursor is an at least partially polymerized reaction product of i) a monovalent monomer mixture and ii) a thermal initiator for a free radical polymerization reaction. The monovalent monomer mixture contains (1) a polar monomer having an acidic group or a salt thereof and (2) at least one alkyl (meth)acrylate with an alkyl group having at least 4 carbon atoms.

The above summary of the present invention is not intended to describe each embodiment or every implementation of the present invention. The Figures, Detailed Description, and Examples that follow more particularly exemplify these embodiments.

### Brief Description of the Drawings

The invention may be more completely understood in consideration of the following detailed description of various embodiments of the invention in connection with the accompanying drawings, in which:

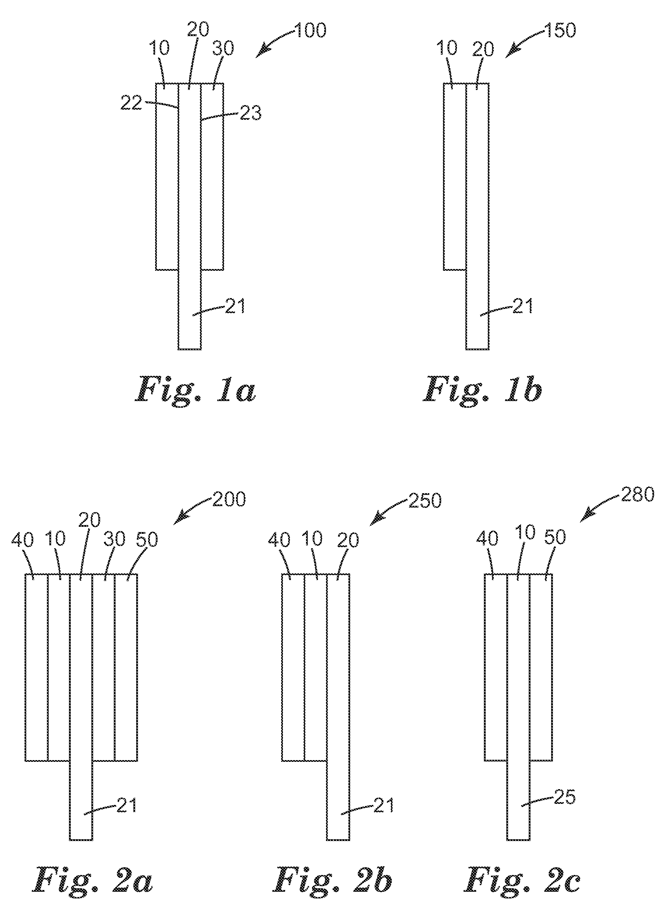

Figure 1a is a schematic diagram of an exemplary stretch releasable adhesive tape with a backing layer and two pressure-sensitive adhesive layers. Figure 1b is a schematic diagram of another exemplary stretch releasable adhesive tape with a backing layer and a single pressure-sensitive adhesive layer.
Figure 2a is a schematic diagram of an exemplary article that includes two substrates coupled together using the stretch releasable adhesive tape exemplified in Figure 1a. Figure 2b is a schematic diagram of another exemplary article that includes the stretch releasable adhesive tape exemplified in Figure 1b adhered to a single substrate. Figure 2c is a schematic diagram of yet another exemplary article that includes two substrates coupled together using a pressure-sensitive adhesive layer.

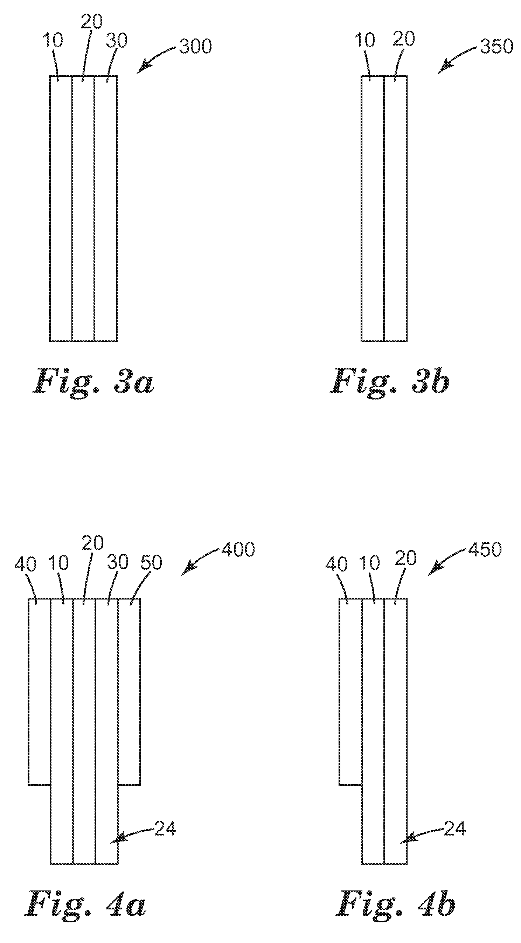

Figure 3a is a schematic diagram of another exemplary stretch releasable adhesive tape with a backing layer and two pressure-sensitive adhesive layers. Figure 3b is a schematic diagram of another exemplary stretch releasable adhesive tape with a backing layer and a single pressure-sensitive adhesive layer.
Figure 4a is a schematic diagram of another exemplary article that includes two substrates coupled together using the stretch releasable adhesive tape exemplified in Figure 3a. Figure 4b is a schematic diagram of yet another exemplary article that includes the stretch releasable adhesive tape exemplified in Figure 3b adhered to a single substrate.

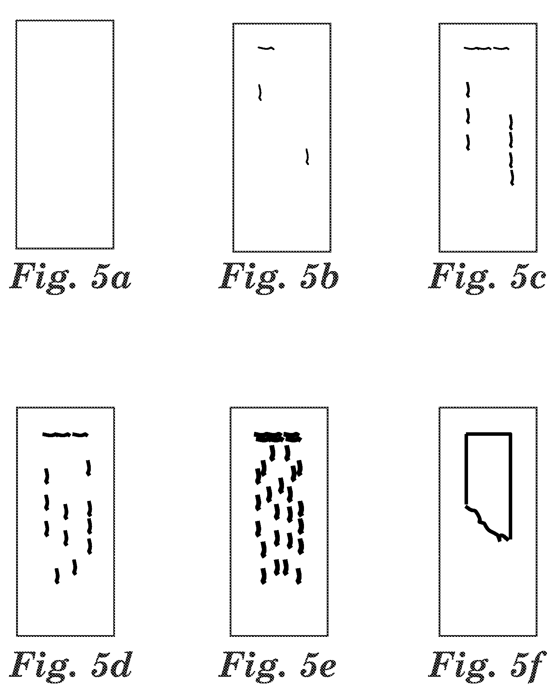

Figures 5a to 5f are schematic diagrams showing the rating system for removal of the pressure-sensitive adhesive or adhesive tape from a substrate. Figure 5a exemplifies no adhesive residue remaining on the substrate and Figure 5b exemplifies substantially no adhesive residue remaining on the substrate. Figures 5c, 5d, and 5e exemplify progressively more adhesive residue remaining on the substrate. Figure 5f exemplifies a pressure-sensitive adhesive layer or adhesive tape that broke (i.e., ruptured) upon attempted removal from the substrate.

While the invention is amenable to various modifications and alternative forms, specifics thereof have been shown by way of example in the drawings and will be described in detail.

### Detailed Description of the Invention

Pressure-sensitive adhesives are described that include a crosslinked acrylic copolymer and inorganic particles dispersed or suspended in the crosslinked acrylic copolymer. The pressure-sensitive adhesives can be used as a stretch releasable adhesive layers or can be used in stretch releasable adhesive tapes. That is, the pressure-sensitive adhesive layers or adhesive tapes can be removed by stretching after being adhered to a substrate. Articles containing the adhesive tapes and pressure-sensitive adhesive layers, methods of using the adhesive tapes and pressure-sensitive adhesive layers, and methods of making both the pressure-sensitive adhesive layers and the adhesive tapes are described.

Although various stretch releasing adhesive layers and adhesive tapes are known, there have been problems with the use of acrylic-based adhesive layers. Often, the adhesive strength of acrylic-based adhesive layers builds over time and removal can be difficult. Removal of the acrylic-based adhesive often results in damage to the substrate to which it was adhered. If the adhesive can be removed, an adhesive residue is often left on the substrate. Surprisingly, the acrylic-based adhesives described herein usually can be removed relatively easily and tend to leave little or no residue on the substrates upon removal. Prior to removal by stretching, the adhesives typically exhibit high load shear adhesion.

The pressure-sensitive adhesive contains 1) an acrylic copolymer that is crosslinked and 2) inorganic particles dispersed or suspended in the acrylic copolymer. In many embodiments, the acrylic copolymer is a random copolymer that is formulated to exhibit the requisite viscoelastic properties resulting in a desired balance of tack, peel adhesion, and shear holding power. That is, the polymerizable material is chosen so that the resulting acrylic copolymer satisfies the Dahlquist criterion (i.e., the rubbery plateau modulus is lower than the Dahlquist number). Stated differently, the acrylic copolymer itself is often a pressure-sensitive adhesive without the addition of a tackifier.

As used herein, the term "adhesive" and "pressure-sensitive adhesive" are used interchangeably. Likewise, the terms "adhesive layer" and "pressure-sensitive adhesive layer" are used interchangeably. The terms "pressure-sensitive adhesive layer" and "PSA layer" are used interchangeably.

As used herein, the term "polymerizable material" refers to a compound of any molecular weight that has at least one polymerizable group such as an ethylenically unsaturated group. The polymerizable material can include monomers, oligomers, and the like. The process of polymerization results in the formation of a polymer and includes reactions that extend a polymeric chain, that crosslink one or more polymeric chains, or both. The term "copolymer" is used to refer to a polymeric material prepared from at least two different monomers.

As used herein, the term "in the range of" includes the endpoints and all values between the endpoints.

More specifically, the acrylic copolymer included in the pressure-sensitive adhesive is a crosslinked reaction product of a curable composition that contains a) an acrylic precursor and b) a crosslinker that has at least two aziridinyl groups. The acrylic precursor is an at least partially polymerized reaction product of a monovalent monomer mixture formed in the presence of an organic solvent and a thermal initiator for a free radical polymerization reaction. Stated differently, the acrylic precursor is prepared by solution polymerization of the monovalent monomer mixture. The acrylic precursor is subsequently crosslinked to form the acrylic copolymer. As used herein, the term "acrylic precursor" refers to acrylic material prior to crosslinking and the term "acrylic copolymer" refers to an acrylic material that has been crosslinked.

As used herein, the term "monovalent monomer" refers to a compound having only one group that is capable of undergoing a free radical polymerization reaction. Monovalent monomers typically have a single ethylenically unsaturated group. The monovalent monomer mixture includes 1) a polar monomer having an acidic group or a salt thereof and 2) at least one alkyl (meth)acrylate with an alkyl group having at least 4 carbon atoms. Other optional monovalent monomers can also be present in the monovalent monomer mixture.

The monovalent monomer mixture includes a polar monomer having an acidic group or a salt of an acidic group. That is, the polar monomer is an acidic monomer having an ethylenically unsaturated group or the salt of the acidic monomer. The polar monomer can be, for example, an ethylenically unsaturated carboxylic acid, an ethylenically unsaturated phosphonic acid, an ethylenically unsaturated sulfonic acid, a salt thereof, or a combination thereof. In many embodiments, the cation of the salt is an ion of an alkaline metal (e.g., sodium, potassium, or lithium ion), an ion of an alkaline earth (e.g., calcium, magnesium, or strontium ion), an ammonium ion, an ammonium ion substituted with one or more alkyl groups, an ammonium ion substituted with one or more aryl groups, or an ammonium ion substituted by one or more aryl groups and one or more alkyl groups. Exemplary acidic monomers include, but are not limited to, acrylic acid, methacrylic acid, itaconic acid, fumaric acid, crotonic acid, citraconic acid, maleic acid, oleic acid, β-carboxyethyl acrylate, 2-acrylamidoethanesulfonic acid, 2-acrylamido-2-methylpropane sulfonic acid, 2-methacrylamido-2-methylpropane sulfonic acid, vinylsulfonic acid, and the line. In many embodiments, the polar monomer is acrylic acid.

The polar monomer with an acid group or salt thereof in the monovalent monomer mixture is usually added to enhance adhesion to the backing layer, to enhance adhesion to substrates with polar surfaces, and to increase the cohesive strength of the pressure-sensitive adhesive. The polar monomer also provides the acid group that is capable of reacting with the crosslinker having at least two aziridinyl groups. Often, the durability of an adhesive tape upon exposure to relatively high temperature, high humidity conditions, or both can be improved by the addition of the polar monomer. However, if too much of the polar monomer is added, the adhesion may build over time. That is, removal of the adhesive adhered to a substrate may become more difficult over time.

The polar monomer with an acid group or salt thereof is often present in an amount up to 30 weight percent based on the weight of polymerizable material in the monovalent monomer mixture. In many embodiments, the polar monomer is present in an amount up to 25 weight percent, up to 20 weight percent, up to 15 weight percent, or up to 10 weight percent based on the weight of polymerizable material in the monovalent monomer mixture. The monovalent monomer mixture often contains at least 1 weight percent, at least 2 weight percent, at least 3 weight percent, at least 4 weight percent, or at least 5 weight percent polar monomer. The polar monomer can be present, for example, in an amount in the range of 1 to 30 weight percent, in the range of 1 to 20 weight percent, in the range of 1 to 10 weight percent, or in the range of 5 to 20 weight percent based on the weight of polymerizable material in the monovalent monomer mixture.

Other types of polar monomers can be added in addition to the polar monomer with an acidic group or salt thereof. For example, the monovalent monomer mixture can include (a) a first polar monomer having an acidic group or a salt thereof and (b) a second polar monomer having a hydroxyl group, a secondary amido group, a tertiary amido group, or an ether group (i.e., a group containing an alkylene-oxy-alkylene group of formula -R-O-R- where each R is an alkylene having 1 to 4 carbon atoms).

Exemplary second polar monomers with a hydroxyl group include, but are not limited to, hydroxyalkyl (meth)acrylates (e.g., 2-hydroxyethyl acrylate or 3-hydroxypropyl acrylate), hydroxyalkyl (meth)acrylamides (e.g., 2-hydroxyethyl acrylamide or 3-hydroxypropyl acrylamide), and ethoxylated hydroxyethyl methacrylate (e.g., monomers commercially available from Sartomer under the trade designation CD570, CD571, CD572). Exemplary second polar monomers with secondary amido groups include, but are not limited to, N-alkyl acrylamides such as N-methyl acrylamide, N-ethyl acrylamide, N-isopropyl acrylamide, or N-tert-octyl acrylamide. Exemplary second polar monomers with a tertiary amido group include, but are not limited to, N-vinyl caprolactam, N-vinyl-2-pyrrolidone, acryloyl morpholine, and N,N-dialkyl acrylamides such as N,N-dimethyl acrylamide, N,N-diethyl acrylamide, N,N-dipropyl acrylamide, and N,N-dibutyl acrylamide. Exemplary second polar monomers with an ether group include, but are not limited to, alkoxylated alkyl acrylates such as ethoxyethoxyethyl acrylate, 2-methoxyethyl acrylate, and 2-ethoxyethyl acrylate; and poly(alkylene oxide) acrylates such as poly(ethylene oxide) acrylates, and poly(propylene oxide) acrylates. The poly(alkylene oxide) acrylates are often referred to as poly(alkylene glycol) acrylates. These monomers can have any suitable end group such as a hydroxyl group or an alkoxy group. For example, when the end group is a methoxy group, the monomer can be referred to as methoxy poly(ethylene glycol) acrylate.

In addition to the polar monomer with an acid group or salt thereof, the monovalent monomer mixture used to form the acrylic precursor contains an alkyl (meth)acrylate. The alkyl (meth)acrylate in the monovalent monomer mixture is usually added to control the glass transition temperature (Tg) and the storage modulus of the acrylic copolymer. To provide a pressure-sensitive adhesive layer, the Tg of the acrylic copolymer is usually less than room temperature (e.g., less than 25°C or less than 20°C).

The alkyl (meth)acrylate can be the reaction product of (meth)acrylic acid with a monohydric alcohol. The alcohol is usually not a tertiary alkyl alcohol. Suitable alkyl (meth)acrylate monomers often have an alkyl group with at least 4 carbon atoms, at least 6 carbon atoms, or at least 8 carbon atoms. For example, the alkyl group of the alkyl (meth)acrylate often has 4 to 20 carbon atoms, 4 to 18 carbon atoms, 4 to 16 carbon atoms, 4 to 12 carbon atoms, or 4 to 10 carbon atoms. The alkyl group of the alkyl (meth)acrylate can be linear, cyclic, or a combination thereof and can be optionally substituted with an aryl group such as a phenyl. The alkyl (meth)acrylate is often an alkyl acrylate.

Exemplary alkyl (meth)acrylates include, but are not limited to, n-butyl acrylate, isobutyl acrylate, hexyl acrylate, 2-ethylhexyl acrylate, isooctyl acrylate, n-octyl acrylate, n-octyl methacrylate, 2-methylbutyl acrylate, isononyl acrylate, n-nonyl acrylate, isoamyl acrylate, n-decyl acrylate, isodecyl acrylate, isobornyl acrylate, 4-methyl-2-pentyl acrylate, 2-octyl acrylate, and dodecyl acrylate. There are often more than one alkyl (meth)acrylate monomer included in the monovalent monomer mixture. For example, the monovalent monomer mixture can contain two, three, four, or even more alkyl (meth)acrylates monomers with an alkyl group having at least 4 carbon atoms. The alkyl (meth)acrylate often includes isooctyl acrylate.

The alkyl (meth)acrylate monomer is often present in an amount equal to at least 40 weight percent based on the total weight of polymerizable material in the monovalent monomer mixture. For example, the alkyl (meth)acrylate monomer can be present in an amount equal to at least 45 weight percent, at least 50 weight percent, at least 60 weight percent, at least 70 weight percent, at least 75 weight percent, or at least 80 weight percent based on the weight of polymerizable material in the monovalent monomer mixture. The amount of the alkyl (meth)acrylate can be up to 99 weight percent, up to 98 weight percent, up to 97 weight percent, up to 95 weight percent, up to 90 weight percent, up to 85 weight percent, up to 80 weight percent, or up to 75 weight percent based on the weight of polymerizable material in the monovalent monomer mixture. In some examples, the alkyl (meth)acrylate monomer is present in an amount in the range of 40 to 99 weight percent, in the range of 45 to 95 weight percent, in the range of 50 to 99 weight percent, in the range of 60 to 98 weight percent, in the range of 70 to 98 weight percent, or in the range of 75 to 95 weight percent based on the weight of polymerizable material in the monovalent monomer mixture. The amount of alkyl monomer can be due to a single monomer or to multiple monomers.

In some embodiments, the monovalent monomer mixture contains up to 30 weight percent of the polar monomers and at least 40 percent of the alkyl (meth)acrylate monomer based on the weight of monomers in the monovalent monomer mixture. For example, the monomer mixture can include 1 to 30 weight percent of the polar monomer and 70 to 99 weight percent of the alkyl (meth)acrylate. In other examples, the monomer mixture can include 1 to 20 weight percent of the polar monomer and 80 to 99 weight percent of the alkyl (meth)acrylate. In still other examples, the monomer mixture can include 1 to 10 weight percent of the polar monomer and 90 to 99 percent of the alkyl (meth)acrylate.

Other optional monovalent monomers can be included in the monovalent monomer mixture. For example, alkyl (meth)acrylate monomers with an alkyl group with fewer than 4 carbon atoms (e.g., methyl acrylate) or aryl (meth)acrylates (e.g., 4-biphenyl acrylate, 2-naphtyl acrylate, and phenyl acrylate) can be added. These monomers are often added to modify the Tg of the acrylic copolymer or to modify the modulus of the acrylic copolymer. If added, these other monovalent monomers can be present in an amount up to 50 weight percent based on the weight of polymerizable material in the monovalent monomer mixture. In many examples, these optional monovalent monomers are present in an amount up to 40 weight percent, up to 30 weight percent, up to 20 weight percent, or up to 10 weight percent. If present, the optional monovalent monomers can be present in an amount in the range of 1 to 50 weight percent, in the range of 1 to 40 weight percent, in the range of 5 to 40 weight percent, or in the range of 10 to 40 weight percent.

In some embodiments that include the other optional monovalent monomer, the monomer mixture can include 1 to 20 weight percent of the polar monomer, 45 to 95 weight percent of the alkyl (meth)acrylate, and 1 to 50 weight percent of the optional monovalent monomer. For example, the monovalent monomer mixture can include 1 to 10 weight percent polar monomer, 50 to 95 weight percent of the alkyl (meth)acrylate, and 5 to 40 weight percent of the optional monovalent monomer. In another example, the monovalent monomer mixture can include 1 to 10 weight percent polar monomer, 50 to 90 weight percent of the alkyl(meth)acrylate, and 10 to 40 weight percent of the optional monovalent monomer.

The polymerizable material in the monovalent monomer mixture is typically dissolved in an organic solvent. That is, a polymerizable composition is formed that includes the monovalent monomer mixture and an organic solvent. The organic solvent is typically selected based on its compatibility (i.e., miscibility) with both the polymerizable material (i.e., the monovalent monomers) and the resulting acrylic precursor. Exemplary organic solvents include, but are not limited to, acetonitrile, tetrahydrofuran, ethyl acetate, toluene, acetone, methyl ethyl ketone, methanol, ethanol, isopropanol, N-methyl pyrrolidone, chlorinated and fluorinated hydrocarbons, fluorinated ethers, or combinations thereof.

Any suitable amount of the organic solvent can be used in the polymerizable composition. The amount of organic solvent is typically selected so that the monovalent monomers are completely dissolved and the viscosity is sufficiently low for good mixing. If the concentration of the polymerizable material is too dilute, however, longer reaction times may be required. Often, the amount of organic solvent is selected to provide a percent solids content in the range of 30 to 70 weight percent, in the range of 40 to 60 weight percent, or in the range of 45 to 55 weight percent.

In addition to the monovalent monomer mixture and the organic solvent, the polymerizable composition typically further includes a thermal initiator for a free radical polymerization reaction. Any suitable known thermal initiator can be used. In many embodiments, the thermal initiator is a peroxide, hydroperoxides, or azo compound. Exemplary peroxides include, but are not limited to, benzoyl peroxide, cyclohexane peroxide, and lauryl peroxide. An exemplary hydroperoxide includes, but is not limited to, tert-butyl hydroperoxide. Exemplary azo compounds include, but are not limited to, 2,2'-azobis(2-methylbutane nitrile) that is commercially available under the trade designation VAZO 67 from DuPont (Wilmington, DE), 2,2'-azobis(isobutyronitrile) that is commercially available as VAZO 64 from DuPont, and 2,2'-azobis(2,4-dimethylpentane nitrile) that is commercially available as VAZO 52 from DuPont. The initiator is typically present in an amount in the range of 0.01 to 5 weight percent, in the range of 0.01 to 2 weight percent, in the range of 0.01 to 1 weight percent, or in the range of 0.01 to 0.5 weight percent based on a total weight of polymerizable material in the polymerizable composition.

Exemplary polymerizable compositions for preparation of the acrylic precursor often contain the monomer mixture in an amount in the range of 30 to 70 weight percent, the organic solvent in an amount in the range of 70 to 30 weight percent, the thermal initiator in an amount no greater than 3 weight percent, and inorganic particles in an amount in the range of 0 to 15 weight percent. For example, the polymerizable composition can include the monomer mixture in an amount in the range of 40 to 60 weight percent, the organic solvent in an amount in the range of 60 to 40 weight percent, the thermal initiator in an amount in the range of no greater than 2 weight percent, and inorganic particles in an amount in the range of 0 to 10 weight percent. In another example, the polymerizable composition can include the monomer mixture in an amount in the range of 45 to 55 weight percent, the organic solvent in an amount in the range of 55 to 45 weight percent, the thermal initiator in an amount no greater than 1 weight percent, and inorganic particles in an amount in the range of 0 to 10 weight percent. All of these weight percent amounts are based on the total weight of the polymerizable composition.

The polymerizable composition is often purged with an inert gas such as nitrogen with the purpose of deoxygenating, sealed, and heated at a temperature in the range of about 40°C to about 80°C under conditions of good mixing. The polymerizable composition is at least partially polymerized. If heated for about 24 hours, the reaction is typically at least 80 percent complete. That is, at least 80 percent of the polymerizable material in the monovalent monomer mixture has undergone free radical polymerization to form the acrylic precursor. In some embodiments, at least 85 percent, at least 90 percent, at least 95 percent, at least 97 percent, at least 98 percent, or at least 99 percent of the polymerizable material has reacted.

After formation of the acrylic precursor, a precursor composition is formed that can be used to prepare a pressure-sensitive adhesive. The precursor composition includes a curable composition and inorganic particles. The curable composition includes the acrylic precursor and a crosslinker with at least two aziridinyl groups. Stated differently, the precursor composition usually includes the acrylic precursor, the crosslinker with at least two aziridinyl groups, and inorganic particles. An organic solvent is typically present to lower the viscosity of the precursor composition. The organic solvent is often the same solvent used during the preparation of the acrylic precursor and it selected to be compatible (i.e., miscible) with the acrylic precursor and with the crosslinker. The crosslinker is added after formation of the acrylic precursor. The inorganic particles, however, can be added prior to formation of the acrylic precursor, after formation of the acrylic precursor, or both before and after formation of the acrylic precursor. The inorganic particles sometimes are more easily dispersed if they are added prior to formation of the acrylic precursor.

The crosslinker can include any compound having at least two aziridinyl groups. In many embodiments, suitable crosslinkers have two aziridinyl groups and are of Formula (I). 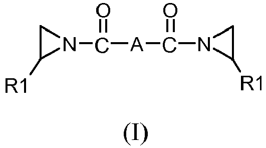 In Formula (I) each R1 is independently hydrogen or an alkyl group such as an alkyl group having 1 to 10 carbon atoms, 1 to 6 carbon atoms, 1 to 4 carbon atoms, or 1 to 3 carbon atoms. Group A is an arylene having 6 to 10 carbon atoms or a heteroarylene have 3 to 10 carbon atoms and 1 to 3 heteroatoms. Various crosslinkers of Formula (I) are further described in US Patent Application Publications 2003/0215630 A1, incorporated herein by reference. In some exemplary crosslinkers, A is phenylene and R1 is hydrogen or methyl. The aziridinyl-containing crosslinker reacts with the acidic groups (e.g., carboxyl groups) in the acrylic precursor resulting in the opening of the three-member ring and formation of a covalent bond. Reaction of the crosslinker with carboxyl groups on different acrylic precursor molecules results in the formation of a covalent link between the two molecules. The covalent link includes at least the group -NH-(CO)-A-(CO)-NH-.

The crosslinker is typically added for cohesive reinforcement of the pressure-sensitive adhesive. An adhesive with good cohesive strength is less likely to leave a residue when stretched for removal after being adhered to the substrate. If too much crosslinker is added, however, the adhesive tends to become less compliant and may not function as a pressure-sensitive adhesive. The crosslinker can usually be present in an amount up to 10 weight percent based on the weight of the acrylic precursor or based on the weight of monovalent monomers used to form the acrylic precursor from the monovalent monomer mixture. In many embodiments, the crosslinker is present in an amount up to 5 weight percent, in the amount up to 3 weight percent, in an amount up to 2 weight percent, or in an amount up to 1 weight percent. The amount of the crosslinker is typically at least 0.01 weight percent, at least 0.02 weight percent, at least 0.03 weight percent, at least 0.05 weight percent, or at least 0.1 weight percent. For example, the crosslinker can be present in the range of 0.01 to 10 weight percent, in an amount in the range of 0.01 to 5 weight percent, in the range of 0.01 to 3 weight percent, in the range of 0.01 to 2 weight percent, in the range of 0.01 to 1 weight percent, or in the range of 0.01 to 0.5 weight percent based on the weight of the acrylic precursor or based on the weight of monovalent monomers in the monovalent monomer mixture.

The inorganic particles included in the precursor composition tend to enhance the performance of the resulting pressure-sensitive adhesive. More particularly, the inorganic particles tend to increase the cohesive strength of the pressure-sensitive adhesive and tend to increase the rubbery plateau modulus. Surprisingly, the addition of the inorganic particles decreases the adhesive residue remaining on the substrate when the adhesive is stretched for removal after having been adhered to the substrate. That is, the tackiness of the adhesive layer tends to decrease with stretching in the presence of the inorganic particles.

The inorganic particles can be uniformly or non-uniformly distributed throughout the precursor composition. Likewise, the inorganic particles can be uniformly or non-uniformly distributed throughout the crosslinked acrylic copolymer or throughout the pressure-sensitive adhesive. The inorganic particles can be any suitable metal, metal alloy, metal oxide, ceramic material, or mixture thereof. The inorganic particles are often selected from, but not limited to, alumina, titania, zirconia, silica, or the like.

In many embodiments, the inorganic particles are fumed silica particles. Suitable fumed silica is commercially available, for example, under the trade designation AEROSIL (e.g., AEROSIL R972, R974, R976, R300, R380, R130, R150, R200, R202, R805, and R812) from Evonik Industries (Essen, Germany) or under the trade designation CABOSIL (e.g., CABOSIL TS-720, TS-610, TS-530, and TS-500) from Cabot (Alpharetta, GA). The fumed silica can have any suitable surface area. For example, the surface area can be in the range of 1 to 500 m²/gram, in the range of 10 to 400 m²/gram, or in the range of 100 to 400 m²/gram. The fumed silica can have any suitable particle size. In some applications, the fumed silica has an average primary particle size less than 100 nanometers, less than 50 nanometers, or less than 20 nanometers. Although either hydrophobic or hydrophilic fumed silica can be used, hydrophobic fumed silica is often used because such particles tend to disperse better in the organic solvents typically included in the various compositions. These particles can be added either before or after formation of the acrylic precursor but are often added before preparing the acrylic precursor.

In other embodiments, the inorganic particles are aerogels such as silica aerogel particles (e.g., crushed aerogels or areogel powder). The silica aerogel particles often have pores in the nanometer range (e.g., less than 100 nanometers or less than 50 nanometers) and have surface areas equal to at least 500 m²/gram. Exemplary aerogel silica particles can have an average particle size that is less than 20 microns or less than 10 microns. Although the size of the silica aerogel particles are larger than the wavelength of light, the particles are often translucent and can be used to form adhesive layers that are relatively clear even though they may not be considered to be optically clear. Exemplary silica aerogel particles in translucent and opacified grades are commercially available under the trade designation NANOGEL from Cabot (Billerica, MA). The aerogel silica particles can be added either before or after formation of the acrylic precursor but are often added after the acrylic precursor has been prepared. That is, these particles often can be dispersed in the precursor composition after formation of the acrylic precursor.

Although the inorganic particles can be surface modified to facilitate dispersion in the acrylic copolymer, in the precursor composition, or in the polymerizable composition, the inorganic particles are often not surface modified. The inorganic particles can be agglomerated or non-agglomerated and aggregated or non-aggregated. The inorganic particles can have any desired particle size or particle shape. To provide an optically clear adhesive tape, however, the inorganic particles are often selected to have an average particle size that is less than 1000 nanometers. For example, the average particle size is often less than 500 nanometers, less than 200 nanometers, less than 100 nanometers, or less than 50 nanometers. To prepare adhesive tapes that do not need to be optically clear, larger inorganic particles can be used. For example, the inorganic particles can have an average particle size up to 5 micrometers, up to 10 micrometers, up to 20 micrometers, up to 50 micrometers, or up to 100 micrometers.

The pressure-sensitive adhesive layer can include, for example up to 25 weight percent inorganic particles based on the weight of the acrylic precursor in the precursor composition or based on the weight of the acrylic copolymer in the pressure-sensitive adhesive. For example, the inorganic particles can be present in an amount up to 20 weight percent, up to 15 weight percent, up to 10 weight percent, or up to 5 weight percent. The inorganic particles are often present in an amount equal to at least 1 weight percent, at least 2 weight percent, at least 5 weight percent, or at least 10 weight percent inorganic particles. For example, the amount of inorganic particles can be in the range of 1 to 25 weight percent, in the range of 1 to 20 weight percent, in the range of 2 to 20 weight percent, in the range of 5 to 20 weight percent, in the range of 1 to 15 weight percent, in the range of 5 to 15 weight percent, in the range of 1 to 10 weight percent, or in the range of 2 to 10 weight percent based on the weight of the acrylic precursor in the precursor composition or based on the weight of monovalent monomer in the monovalent monomer mixture or based on the weight of the acrylic copolymer in the pressure-sensitive adhesive.

The precursor composition typically includes an organic solvent. The organic solvent is often the same organic solvent used in the preparation of the acrylic precursor in the polymerizable composition. Often, additional organic solvent is added so that the viscosity of the precursor composition is suitable for use as a coating composition. However, because most of the organic solvent typically is removed in the process of forming the pressure-sensitive adhesive layer, a large excess of organic solvent is usually avoided. In many embodiments, the percent solids of the precursor composition are in the range of 10 to 50 percent solids, in the range of 10 to 40 percent solids, in the range of 15 to 40 percent solids, in the range of 15 to 35 percent solids, or in the range of 20 to 35 percent solids.

Some exemplary precursor compositions contain the acrylic precursor in an amount in the range of 10 to 50 weight percent, the crosslinker in an amount in the range of 0.01 to 10 weight percent, inorganic particles in an amount in the range of 0.5 to 10 weight percent, and organic solvent in an amount of in the range of 50 to 90 weight percent based on a total weight of the precursor composition. Other exemplary precursor compositions contain the acrylic precursor in an amount in the range of 15 to 40 weight percent, the crosslinker in an amount in the range of 0.1 to 10 weight percent, inorganic particle in an amount in the range of 1 to 10 weight percent, and organic solvent in an amount in the range of 50 to 80 weight percent. Still other exemplary precursor compositions contain the acrylic precursor in an amount in the range of 15 to 35 weight percent, the crosslinker in an amount in the range of 1 to 10 weight percent, inorganic particles in an amount in the range of 1 to 5 weight percent, and organic solvent in an amount in the range of 50 to 80 weight percent. These weight percent amounts are based on the total weight of the precursor composition.

The precursor composition can be applied to a support surface to form a precursor layer. Any suitable means of forming the precursor layer can be used. For example, the precursor composition can be applied to the support surface using a method such as brush coating, spray coating, gravure coating, transfer roll coating, knife coating, curtain coating, wire rod coating, and doctor blade coating. The coating can have any suitable thickness.

Any suitable support surface can be used. In many embodiments, the support is a release liner or the backing layer for an adhesive tape. Any suitable release liner or backing layer can be used. Suitable release liners are typically paper (e.g., Kraft paper) or polymeric films. In many applications, polymeric films are preferred. Polymeric films used as release liners can be formed, for example, from polyester such as polyethylene terephthalate or polyolefins such as polyethylene, polypropylene, or combinations thereof. The surface of the release liners can be optionally treated with a release agent such as a silicone, a fluorochemical such as a fluorosilicone, or other low surface energy materials such as a polyolefin (e.g., polyethylene, polypropylene, or low density polyethylene). An exemplary fluorosilicone is commercially available from Dow Corning under the trade designation SYL-OFF (e.g., SYL-OFF Q2-7785 or SYL-OFF Q2-7786). Suitable release liners and methods for treating liners are further described in, for example, U.S. Patent Nos.: 4,472,480 (Olson), 4,980,443 (Kendziorski), and 4,736,048 (Brown et al.), 5,578,381 (Hamada et al.), and 5,082,706 (Tangney); and U.S. Patent Application Publication 2008/0280086 (Sheridan et al.).

The precursor layer on the support is then heated to react the crosslinker with the acrylic precursor to form a crosslinked acrylic copolymer. The curing reaction (e.g., crosslinking reaction) is also typically accompanied by removal of the organic solvent through evaporation or drying. As the percent solids of the precursor layer increases through removal of the organic solvent, the components involved in the curing reaction are more likely to interact and react. The curing and solvent removal processes typically occur at temperatures above room temperature. Although the actual temperature chosen depends on the boiling point of the organic solvent, the precursor layer is often heated at a temperature equal to at least 40°C, at least 50°C, or at least 60°C. The temperature is usually less than 120°C or less than 100°C. For example, the temperature can be in the range of 40°C to 120°C, in the range of 50°C to 100°C, or in the range of 60°C to 90°C. Any suitable oven can be used. In some embodiments, a stream of air or an inert gas is passed over the precursor layer to facilitate removal of the organic solvent.

In some embodiments, it may be desirable to impart a microstructured surface to the pressure-sensitive adhesive layer. Microstructured surfaces tend to facilitate air egress during lamination. If it is desired to have a microstructured surface on the pressure-sensitive adhesive layer, this layer can be formed while in contact with a tool or a liner (e.g., a release liner) containing microstructured features. After curing the precursor layer to form the pressure-sensitive adhesive layer, the liner or tool can then be removed to expose an adhesive layer having a microstructured surface. With optical applications, it is generally desirable that the microstructures disappear over time to prevent interference with the optical performance or properties.

The pressure-sensitive adhesive layer, which corresponds to the cured precursor layer, contains the crosslinked acrylic copolymer and inorganic particles dispersed or suspended in the acrylic copolymer. This layer is often tacky as prepared but, if desired, a tackifier can be added to enhance the tackiness. If added, the tackifier is typically added to the precursor composition prior to formation of a precursor layer. Any tackifier typically included in pressure-sensitive adhesive compositions can be used. Either solid or liquid tackifiers can be added. Solid tackifiers generally have a number average molecular weight (Mn) no greater than about 10,000 grams/mole and a softening point above about 70°C. Liquid tackifiers are viscous materials that have a softening point of about 0°C to about 70°C. Solid tackifying resins are generally preferred.

Suitable tackifying resins include rosins and their derivatives (e.g., rosin esters); polyterpenes and aromatic-modified polyterpene resins; coumarone-indene resins; and hydrocarbon resins such as alpha pinene-based resins, beta pinene-based resins, limonene-based resins, aliphatic hydrocarbon-based resins, aromatic-modified hydrocarbon-based resins, aromatic hydrocarbon resins, and dicyclopentadiene-based resins. These tackifying resins, if added, are often hydrogenated to lower their color contribution to the pressure-sensitive adhesive layer.

If added, the tackifier is often present in an amount up to about 40 weight percent based on the acrylic precursor in the precursor composition or based on the acrylic copolymer in the pressure-sensitive adhesive. The tackifier can be present, for example, in an amount up to 35 weight percent, up to 30 weight percent, up to 25 weight percent, up to 20 weight percent, up to 15 weight percent, or up to 10 weight percent. Some second precursor compositions contain 1 to 40 weight percent, 5 to 40 weight percent, 10 to 40 weight percent, or 5 to 30 weight percent tackifier.

In some embodiments, the pressure-sensitive adhesive layer contains up to 25 weight percent of the inorganic particles based on the weight of the acrylic copolymer. That is, a pressure-sensitive adhesive containing 100 part of the acrylic copolymer contains up to 25 parts inorganic particles. For example, the pressure-sensitive adhesive layer can contain 1 to 25 weight percent, 1 to 20 weight percent, 1 to 10 weight percent, 2 to 20 weight percent, 5 to 20 weight percent, or 2 to 15 weight percent of the inorganic particles based on the weight of the acrylic copolymer.

The pressure-sensitive adhesive layer can be used as a single layer stretch releasable adhesive. When used as a single layer without a backing layer, the thickness of the pressure-sensitive adhesive layer if often in the range of 5 mils to 50 mils (125 to 1250 micrometers), in the range of 10 to 40 mils (250 to 1000 micrometers), or in the range of 20 to 30 mils (500 to 750 micrometers). When used as a single layer, a part of the adhesive layer is typically used as a tab for pulling the adhesive layer for removal after being adhered to one or more substrates. That is, when adhered to a substrate or when positioned between two substrates, a portion of the adhesive layer extends beyond the substrate or beyond at least one of the substrates. If desired, any means of making the tab non-tacky can be used. For example, the tab portion can be covered with another layer of non-tacky material.

Figure 2c is an exemplary schematic diagram of an article 280 that includes a first substrate 40 coupled to a second substrate 50 using a single pressure-sensitive adhesive layer 10 (e.g., no backing layer is used). The article 280 includes in the following order a first substrate 40, a first adhesive layer 10, and a second substrate 50. The tab 25 is part of the pressure-sensitive adhesive layer and extends beyond both the first substrate 40 and the second substrate 50. The tab is pulled to stretch the adhesive layer 10 and to remove the adhesive layer 10 from the first substrate 40, from the second substrate 50, or from both the first and second substrates 40 and 50.

In addition to being used as a single layer stretch releasable adhesive, the pressure-sensitive adhesive layer can be included in a multilayer construction. When included in a multilayer construction with a backing layer, the resulting construction is referred to herein as an "adhesive tape". That is, as used herein, the term adhesive tape refers to a multilayer construction that includes a backing layer and at least one pressure-sensitive adhesive layer adjacent to the backing layer. Any suitable thickness can be used for the pressure-sensitive adhesive layer or layers included in the adhesive tape. In many exemplary adhesive tapes, each pressure-sensitive adhesive layer has a thickness no greater than 10 mils (250 micrometers), no greater than 5 mils (125 micrometers), no greater than 4 mils (100 micrometers), no greater than 3 mils (75 micrometers), or no greater than 2 mils (50 micrometers). The thickness of the pressure-sensitive adhesive layer in an adhesive tape is often at least 0.1 mils (2.5 micrometers), at least 0.2 mils (5 micrometers), at least 0.5 mils (12.5 micrometers), or at least 1 mil (25 micrometers). For example, the thickness of the pressure-sensitive adhesive layer included in an adhesive tape can be in the range of 0.1 mils (2.5 micrometers) to 10 mils (250 micrometers), in the range of 0.2 mils (5 micrometers) to 10 mils (250 micrometers), in the range of 0.5 mils (12.5 micrometers) to 5 mils (125 micrometers), in the range of 1 mil (25 micrometers) to 3 mils (75 micrometers), or in the range of 1 mil (25 micrometers) to 2 mils (50 micrometers).

In some embodiments, the stretch releasable adhesive tape includes a single pressure-sensitive adhesive layer positioned adjacent to a first major surface of the backing layer. Such a stretch releasable adhesive tape can be placed on the outer surface of a substrate for any desired purpose. For example, the adhesive tape can provide a protective function and can be removed later if the protection is no longer needed or desired. In other examples, the adhesive tape can provide a writable or printable surface (e.g., the writing or printing can be on the backing layer). In some more specific examples, the adhesive tape can function as a label or price sticker that can be removed when no longer needed.

In other embodiments, the stretch releasable adhesive tape includes two pressure-sensitive adhesive layers that are positioned adjacent to opposite major surfaces of the backing layer. Such a stretch releasable adhesive tape can be used to couple a first substrate to a second substrate. If at any later time it is desirable to separate the first substrate from the second substrate, the adhesive tape can be stretched for removal (e.g., stretched to release the adhesive tape from the first substrate, from the second substrate, or from both the first and second substrates). After separation from the adhesive tape and each other, the substrates can be used again, if desired. This is particularly advantageous when at least one of the substrates is expensive, fragile, or difficult to manufacture.

An exemplary stretch releasable adhesive tape construction with two pressure-sensitive adhesive layers is shown schematically in Figure 1a. The adhesive tape 100 includes a backing layer 20 that is positioned between two pressure-sensitive adhesive layers 10 and 30. The first adhesive layer 10 is adjacent to a first major surface 22 of the backing layer 20 and the second adhesive layer 30 is adjacent to the second major surface 23 of the backing layer 20. The first major surface of the backing layer 20 is opposite the second major surface of the backing layer 20. As shown in Figure 1a, the first adhesive layer 10 and the second adhesive layer 30 both contact the backing layer 20 and are directly adhered to the backing layer 20. In other embodiments that are not illustrated, the first adhesive layer 10 and the second adhesive layer 30 are indirectly adhered to the backing layer 20 through one or more intervening layers such as a primer layer. The backing layer 20 extends beyond both the first adhesive layer 10 and the second adhesive layer 30. The region of the backing layer 21 that extends beyond the adhesive layers can function as a tab 21. In Figure 1a, the tab 21 is a part of the backing layer or an extension of the backing layer.

Figure 2a is exemplary schematic diagram of an article 200 that includes two substrates coupled using the stretch releasable adhesive tape shown schematically in Figure 1a. The stretch releasable adhesive tape is positioned between a first substrate 40 and a second substrate 50. That is, the article 200 includes in the following order a first substrate 40, a first adhesive layer 10, a backing layer 20, a second adhesive layer 30, and a second substrate 50. The first adhesive layer 10 adheres to the first substrate 40 and the second adhesive layer 30 adheres to the second substrate 50. The pressure-sensitive adhesive layer typically can be adhered to a substrate with no more than finger pressure and remain adhered to the substrate until the adhesive tape is stretched for removal. The first substrate 40 is coupled to the second substrate 50 through the adhesive tape.

In Figure 2a, the backing layer 20 extends beyond both the first adhesive layer 10 and the second adhesive layer 30. The region of the backing layer that extends beyond both the first adhesive layer 10 and the second adhesive layer 30 can function as a tab 21 for stretch releasing the adhesive tape from both substrates 40 and 50. By pulling on the tab 21 and stretching the adhesive tape, the first adhesive layer 10 can be released from the first substrate 40, the second adhesive layer 30 can be released from the second substrate 50, or both adhesive layers 10 and 30 can be released from both substrates 40 and 50. The combined release allows the separation of the first substrate from the second substrate and the removal of the adhesive tape from between the first substrate and the second substrate.

Another stretch releasable adhesive tape 300 is shown schematically in Figure 3a that includes a backing layer 20 plus two pressure-sensitive adhesive layers 10 and 30. In this embodiment, the backing layer 20 does not extend beyond both the first adhesive layer 10 and the second adhesive layer 30. The use of this adhesive tape to couple a first substrate 40 and a second substrate 50 is shown schematically in Figure 4a. A region of the adhesive tape (layers 10, 20, and 30) extends beyond both substrates 40 and 50. The region of the adhesive tape that extends beyond both substrates 40 and 50 can function as the tab 24. The tab 24 is tacky because the outer surfaces are the adhesive layers 10 and 30. Alternatively, an additional layer (not shown in Figure 3a) such as a film or another non-tacky layer such as talc or ink (printed) can be placed over the adhesive layers 10 and 30 in the region of the tab to provide a non-tacky surface. By pulling on the tab 24 and stretching the adhesive tape, the first adhesive layer 10 can be released from the first substrate 40, the second adhesive layer 30 can be released from the second substrate 50, or both adhesive layers 10 and 30 can be released from both substrates 40 and 50. The combined release allows the separation of the first substrate from the second substrate and the removal of the adhesive tape (layers 10, 20, and 30) between the first substrate 40 and the second substrate 50.

An exemplary stretch releasable adhesive tape construction with a single pressure-sensitive adhesive layer is shown schematically in Figure 1b. The adhesive tape 150 includes a backing layer 20 that is positioned adjacent to a first pressure-sensitive adhesive layer 10. The backing layer 20 extends beyond the first adhesive layer 10. The region of the backing layer 21 that extends beyond the adhesive layers can function as a tab 21. In Figure 1b, the tab 21 is a part of the backing layer or an extension of the backing layer.

Figure 2b is an exemplary schematic diagram of an article that includes one substrate adhered to the stretch releasable adhesive tape shown schematically in Figure 1b. The article 250 includes in the following order a first substrate 40, a first adhesive layer 10, and a backing layer 20. The tab 21 extends beyond the first substrate 40.

Yet another stretch releasable adhesive tape is shown schematically in Figure 3b. This stretch releasable adhesive tape 350 includes a backing layer 20 and one pressure-sensitive adhesive layer 10. The use of this tape adhered to a substrate 40 is shown schematically in Figure 4b. By pulling on the tab 24 and stretching the adhesive tape, the adhesive layer 10 can be release from the substrate.

With an adhesive tape or with a single pressure-sensitive adhesive layer, releasing the adhesive from one or both substrates includes pulling on a tab and stretching. The tab extends beyond at least one of the substrates. The tab can a part of the backing layer (i.e., an extension of the backing layer), a part of at least one adhesive layer (i.e., an extension of the adhesive layer), attached to the backing layer, attached to at least one adhesive layer, or a part of both the backing layer and at least one adhesive layer (i.e., an extension of both the backing layer and at least one adhesive layer). At least one substrate does not contact the adhesive layer in the region of the tab. Usually, both substrates do not contact the adhesive layer in the region of the tab. The tab is usually pulled in a direction that is parallel to or substantially parallel to the surfaces of the substrates. That is, the tab is pulled in a direction that is 0 degrees, less than 5 degrees, less than 10 degrees, less than 15 degrees, less than 20 degrees, less than 25 degrees, less than 30 degrees, or less than 35 degrees. The tab often includes a part of the backing layer. In some embodiments, the tab is formed from a second region of the backing layer that extends beyond a first region of the backing layer that is in contact with the adhesive layers. The tab is often non-tacky in these embodiments. In other embodiments, the tab includes the backing layer and at least one of the adhesive layers. The tab is often tacky in these embodiments. In still other embodiments, the tab is part of the single pressure-sensitive adhesive layer. The tab is usually tacky. A tacky tab can be made non-tacky by covering the tab region with a non-tacky material.

For dual-sided adhesive tapes as shown in Figures 1a and 3a, for example, the adhesive layers as well as backing layer are typically highly extensible. Pulling on the tab causes the adhesive tape to elongate or stretch. Stretching reduces the volume of the adhesive tape in the region between the first substrate and the second substrate and facilitates release of the adhesive tape from one or both substrates. Pulling on the tab can release the adhesive layers from both substrates if the adhesive layers have sufficient cohesive strength, if the adhesive layers adhere more strongly to the backing layer than to the substrates, and if the adhesive tape can be elongated sufficiently to reduce its volume between the substrates without breaking or snapping back into its original position. The stretched adhesive tape can be removed from between the two substrates, the two substrates can be separated, or both. The adhesive tape typically can be stretched at least 50 percent in a first direction (often the first direction is lengthwise and the length can be increased at least 50 percent) without breaking or snapping under the stretch releasing conditions.

The backing layer in any of the adhesive tapes can be of any suitable construction. For example, the backing can be in the form of a foam, a film, or a combination thereof with any suitable thickness, composition, and opaqueness or clarity. The backing layer can be a single layer of film, a single of foam, multiple layers of film, multiple layers of foam, or multiple layers of foam and film.

The backing layer for the adhesive tape is usually selected to have suitable mechanical properties for use in a stretch release adhesive tape. For example, the backing layer is selected so that it can be stretched (elongated) in a first direction (e.g., a lengthwise direction) at least 50 percent without breaking. That is, at least one dimension such as the length of the backing layer can be increased through stretching at least 50 percent without breaking. In some embodiments, the backing layer can be stretched at least 100 percent, at least 150 percent, at least 200 percent, at least 300 percent, at least 400 percent, or at least 500 percent without breaking. The backing layer can often be stretched up to 1200 percent, up to 1000 percent, up to 800 percent, up to 750 percent, or up to 700 percent without breaking. These relatively large elongation values facilitate stretch releasing of the adhesive tape after being adhered to a substrate.

The Young's Modulus of the backing layer can be an indicator of the resistance of the backing layer to stretching. The Young's modulus is often at least about 1,000 psi (about 7 MPa), at least about 2,500 psi (about 17 MPa), or even at least about 3,000 psi (about 21 MPa), no greater than about 72,500 psi (about 500 MPa), or no greater than about 50,000 psi (about 345 MPa). The polymer film preferably is capable of achieving the desired elongation at break in at least one of the machine direction and the cross direction of the film. For some film backing layers such as those described below that contain a poly(alkylene) copolymer, the Young's Modulus is often in the range of about 10 MPa to about 75 MPa. For example, the Young's Modulus can be in the range of 20 to 75 MPa, in the range of 20 to 60 MPa, in the range of 20 to 50 MPa, or in the range of 25 to 50 MPa. The Young's Modulus can be measured, for example, using method ASTM D790-07 or ASTM D882-02.

The tensile strength of the backing layer is an indicator of the load that the backing layer can sustain without breaking and is an indicator of how far the backing layer can be stretched without breaking. Any tensile strength is suitable as long as the backing layer can be stretched at least 50 percent without breaking. The tensile strength is often in the range of about 10 MPa to about 60 MPa or higher. For example, the tensile strength can be in the range of 10 to 60 MPa, in the range of 10 to 50 MPa, in the range of 20 to 60 MPa, in the range of 20 to 55 mPa, or in the range of 25 to 50 MPa. The tensile strength can be measured using method ASTM D882-02.

In many applications, the foam or film backing layers are prepared from a polymeric material such as, for example, a polyolefin (e.g., polyethylene such as high density polyethylene, low density polyethylene, linear low density polyethylene, and linear ultra low density polyethylene, polypropylene, and polybutylene), vinyl copolymers (e.g., polyvinyl chloride and polyvinyl acetates), olefinic copolymers (e.g., ethylene/methacrylate copolymers, ethylene/vinyl acetate copolymers, and ethylene/propylene copolymers), acrylonitrile-butadiene-styrene copolymers, acrylic polymers and copolymers, polyurethanes, and combinations or blends thereof. Exemplary blends include polypropylene/polyethylene blends, polyurethane/polyolefin blends, polyurethane/polycarbonate blends, and polyurethane/polyester blends.

Other suitable blends can include, for example, blends of thermoplastic polymers, elastomeric polymers and combinations thereof. Suitable blends can include, for example, styrene-butadiene copolymers, polychloroprenes (i.e., neoprene), nitrile rubbers, butyl rubbers, polysufide rubbers, cis-1,4-polyisoprenes, ethylene-propylene terpolymers (e.g., EPDM rubber), silicone rubbers, silicone polyurea block copolymers, polyurethane rubbers, polyisobutylenes, natural rubbers, acrylate rubbers, thermoplastic rubbers (e.g., styrene-butadiene block copolymers and styrene-isoprene-styrene block copolymers), and thermoplastic polyolefin rubber materials.

A useful foam backing layer is typically conformable and assists in increasing the degree of surface contact between the pressure-sensitive adhesive layer disposed thereon and the surface of the substrate. The foam layer preferably is capable of achieving from about 50 percent to about 600 percent elongation (i.e., the foam layer is stretchable at least 50 percent to 600 percent). The elongation at break is preferably sufficiently high so that the backing layer remains intact during removal of the adhesive tape from a substrate to which it has been adhered.

The foam backing layers are often selected to optimize properties such as conformability and resiliency. Conformable and resilient polymeric foams are well suited for applications in which the adhesive article is to be adhered to substrates having surface irregularities. The foam layer usually has a density of at least about 2 pounds per cubic foot (pcf), at least about 6 pcf, at least about 8 pcf, or at least about 12 pcf, less than about 30 pcf, less than about 25 pcf, or even less than about 15 pcf. The foam layer can have any thickness suitable for the intended application. Suitable foam backing layers often have a thickness of at least 5 mils or at least 30 mils. The thickness can be up to 100 mils, up to 125 mils, up to 150 mils, or even greater. In some embodiments the foam layer includes multiple layers of foam and each layer of foam contributes a different property such as density, percent elongation, tensile strength, and combinations thereof.

Polymeric film backing layers can be in a variety of forms including, for example, a single-layer or multi-layer film, a porous film, and combinations thereof. The polymeric film may contain one or more fillers (e.g., calcium carbonate). The polymer film can be a continuous layer or a discontinuous layer. Multi-layer polymer films are preferably integrally bonded to one another in the form of a composite film, a laminate film, and combinations thereof. Multilayer polymeric films can be prepared using any suitable method including, for example, co-molding, coextruding, extrusion coating, joining through an adhesive, joining under pressure, joining under heat, and combinations thereof.

A film layer of a backing can be bonded to a layer of foam using any suitable mechanism including, for example, coextruding the film and the foam layer, co-molding, extrusion coating, joining through an adhesive composition, joining under pressure, joining under heat, and combinations thereof. Any suitable adhesive compositions for bonding a film layer to the foam layer can be used. Where only one polymeric film or foam layer of a multi-layer backing is intended to be stretched to effect debonding, that layer should exhibit sufficient physical properties and be of a sufficient thickness to achieve that objective.

In some embodiments, the backing layer is a film that contains a poly(alkylene) copolymer that is derived from at least two different alkene monomers. The poly(alkylene) copolymer is typically the reaction product of an alkene mixture that includes 1) a first alkene selected from ethene, propene, or a mixture thereof and 2) a second alkene monomer selected from a 1,2-alkene having 4 to 8 carbon atoms. For example, the second alkene monomer often has four, six, or eight carbon atoms. That is, the alkene mixture includes 1) ethene, propene, or a mixture thereof and 2) butene, hexane, octane, or a mixture thereof. These copolymers are typically prepared using a metallocene catalyst.

In some applications, the backing layers, the adhesive layers, and the resulting stretch releasable adhesive tapes are optically clear. As used herein, the term "optically clear" refers to a backing layer, an adhesive layer, or an adhesive tape that has a luminous transmission of at least 90 percent and a haze no greater than 5 percent as measured using the method ASTM D1003-07. With this method, measurements are made in the 400 to 700 nanometer wavelength range. The luminous transmission is often equal to at least 91 percent, at least 92 percent, at least 93 percent, at least 94 percent, or least 95 percent. The haze is often no greater than 4, no greater than 3, no greater than 2, or no greater than 1. Some exemplary adhesive tapes have a haze no greater than 3 percent and a luminous transmission equal to at least 90 percent as measured using method ASTM D1003-07. Other exemplary adhesive tapes have a haze no greater than 2 percent and a luminous transmission equal to at least 90 percent as measured using method ASTM D1003-07. Not all materials that are visibly clear are considered to be optically clear. That is, visible clarity is not always synonymous with optical clarity. A material that is visibly clear can have a haze value greater than 5, a luminous transmission value less than 90 percent, or both.

In some articles, the optically clear, stretch releasable adhesive tape can be positioned between two substrates such that the second substrate is visible when viewed through both the first substrate and the optically clear adhesive tape. If the adhesive tape is optically clear, the second substrate 50 in Figures 2a and 4a often can be viewed by looking through the first substrate 40 and the adhesive tape (as shown, the adhesive tape corresponds to layers 10, 20, and 30). The optically clear adhesive tape can be used to couple a first substrate such as an optically clear substrate (e.g., a cover lens) to a second substrate such as a display (e.g., a liquid crystal display). If the coupling is not defective, the optically clear adhesive tape remains positioned between the first substrate and the display. If the coupling is defective, however, the adhesive tape can be removed without damaging the display by stretching. The adhesive tape can be replaced and the first substrate and the display can be coupled again with another optically clear, stretch releasable adhesive tape.

Optically clear backing layers are used to prepare the optically clear adhesive tapes. In many embodiments, the optically clear backing layers contain poly(alkylene) copolymers prepared from an alkene mixture that includes 1) a first alkene selected from ethene, propene, or a mixture thereof and 2) a second alkene monomer selected from a 1,2-alkene having 4 to 8 carbon atoms. Many poly(alkylene) copolymers with suitable mechanical properties for use as a backing layer, however, do not have low haze (i.e., no greater than 5 percent as measured using method ASTM D1003-07) and high luminous transmission (i.e., at least 90 luminous transmission as measured using ASTM D1003-07) that is usually needed to prepare an optically clear backing layer for use in an optically clear adhesive tape. For example, the relatively large crystalline size of many poly(alkylene) copolymers, the use of various additives in many commercially available poly(alkylene) copolymers, and the specific methods used to form films of the poly(alkylene) copolymer can make then unsuitable for use as an optically clear backing layer.

If an optically clear backing is desired, the poly(alkylene) copolymer preferably has some crystalline material rather than being completely amorphous. The crystalline material tends to add strength to the backing layer by functioning as a physical crosslinker. If the size of the crystalline material is too large, however, the haze of the backing layer can be unacceptably large. The crystalline material preferably has a size that is less than a wavelength of visible light. In many embodiments of suitable poly(alkylene) copolymers, at least 95 percent of the crystalline material has a crystalline size less than 400 nanometers. For example, at least 95 percent of the crystalline material can have a crystalline size less than 300 nanometers, less than 200 nanometers, or less than 100 nanometers. A small crystalline size facilitates the formation of a backing layer that is optically clear.

Backing layers with crystalline material smaller than 400 nanometers can be prepared using various methods. In one method, the poly(alkylene) copolymers used to form the backing layer are melted, extruded, and quenched rapidly so that the alignment and growth of the crystals is minimized. In another method, seed materials (i.e., nucleating agents) can be added that facilitate the formation of many crystals within the copolymer upon cooling to form the solidified film. The formation of more crystals tends to favor smaller crystalline sizes. In yet another method, the copolymer composition is varied to alter the crystalline size. A greater amount of the second alkene monomer having 4 to 8 carbon atoms tends to result in smaller crystalline size. The density or specific gravity tends to decrease as the amount of the second alkene monomer increases. The specific gravity is often no greater than 0.91. For example, the specific gravity is often no greater than 0.90 or no greater than 0.89. The specific gravity is often in the range of 0.86 to 0.91, in the range of 0.87 to 0.90, or in the range of 0.88 to 0.90.

If optical clarity is desired, the backing layer preferably is free or substantially free of additives that contribute haze or that lower the luminous transmission. For example, the backing layer typically does not include an anti-blocking agent, a slip agent, or both. That is, the backing layer is usually free or substantially free of an anti-blocking agent, slip agent, or both. As used herein, the term "substantially free" with reference to the anti-blocking agent or to the slip agent means that these agents are each present in an amount no greater than 0.5 weight percent, no greater than 0.3 weight percent, no greater than 0.2 weight percent, no greater than 0.1 weight percent, no greater than 0.05 weight percent, or no greater than 0.01 weight percent. Anti-blocking agents are often added when films are prepared from poly(alkylene) copolymers to prevent the film from sticking to itself such as when formed into a roll. Exemplary anti-blocking agents include, but are not limited to, particles such as diatomaceous earth and talc. Slip agents are often added to reduce friction such as film-to-film friction in a roll or film-to-production equipment friction. The presence of these slip agents also can interfere with good adhesion to the at least one pressure-sensitive adhesive layer. Many commonly used slip agents are primary amides such as those made from long chain fatty acids by amidation. Examples of slip agents include, but are not limited to, stearamide, oleamide, and erucamide.

In many embodiments where optical clarity is desired, the backing layer contains at least 99 percent poly(alkylene) copolymer. For example, the backing layer contains at least 99.1 weight percent, at least 99.2 weight percent, at least 99.3 weight percent, at least 99.4 weight percent, at least 99.5 weight percent, at least 99.6 weight percent, at least 99.7 weight percent, at least 99.8 weight percent, at least 99.9 weight percent poly(alkylene) copolymer.

Exemplary poly(alkylene) copolymers that can be used to prepare optically clear backing layers are commercially available under the trade designation EXACT (e.g., EXACT 3024, 3040, 4011, 4151, 5181, and 8210) and VISTAMAXX (e.g., VISTAMAXX 6202 and 3000) from ExxonMobile Chemical (Houston, TX). Other exemplary poly(alkylene) copolymers are commercially available under the trade designations AFFINITY (e.g., AFFINITY PT 1845G, PL 1845G, PF 1140G, PL 1850G, and PL 1880G), ENGAGE (e.g., ENGAGE 8003), and INFUSE (e.g., INFUSE D9530.05) from Dow Chemical (Midland, MI). EXACT 8210, EXACT 5181, ENGAGE 8003, and INFUSE D9530.05, are ethylene-octene copolymers. EXACT 3040 and EXACT 4151 are ethylene-hexene copolymers. EXACT 3024 and EXACT 4011 are ethylene-butene copolymers.

Exemplary poly(alkylene) copolymers that are not optically clear are available under the trade designations XMAX and MAXILENE series of trade designations (e.g., MAXILENE 200 is an ethylene-octene copolymer that is not prepared with a metallocene catalyst) from Pliant Corporation (Chippewa Falls, Wisconsin). These backing layers can be used to produce adhesive tapes that are visibly clear but not optically clear, slightly hazy, or opaque. These films often contain a slip agent, an anti-blocking agent, or both.

In addition to choosing suitable materials that will result in backing layers with low haze and high luminous transmission, the method of preparing the backing layer must be selected to maintain these values if optical clarity is desired. That is, the method of making the backing layer is typically selected to provide a smooth surface and a relatively uniform thickness. If the surface is roughened, the percent haze may become undesirably large. To provide suitable optical clarity, a process is often selected to provide a thickness that is relatively uniform across the backing layer in any direction. For example, the thickness varies by less than 10 percent, less than 8 percent, less than 6 percent, less than 5 percent across the backing layer in any direction. More specifically, a backing layer having an average thickness of 4 mils (0.1 millimeter or 100 micrometers) has a thickness variation of less than 10 micrometers, less than 8 micrometers, less than 6 micrometers, or less than 5 micrometers across the backing layer in any direction.

If optically clear backing layers are desired, many conventional methods used to form films of poly(alkylene) copolymers are not suitable because the resulting films do not have the requisite smoothness. For example, blowing methods are usually not suitable because anti-blocking agents or slip agents are frequently added. The addition of these agents often tends to roughen the surface of the resulting film. Cast extrusion methods that impart a rough surface to the film in an attempt to minimize contact with a chill roller are typically not suitable. These methods can be used, however, to prepare backing layers when optical clarity is not a concern.

Various methods can be used to prepare backing layers with suitable smoothness and thickness uniformity when optical clarity is desired. In a first example, the poly(alkylene) copolymer can be cast between two smooth support layers such as release liners or between a smooth support layer and a smooth roller. No blocking agent or slip agent is needed and the absence of these agents is preferred. The support layer (e.g., release liner) tends to reinforce the resulting rubbery backing layer and allows the backing layer to be subjected to further processing without distortion or stretching. Further, the support layer tends to protect the surface of the backing layer until it is combined with the at least one pressure-sensitive adhesive layer.

More specifically, the poly(alkylene) copolymer can be extruded as a molten film using, for example, a flat cast extrusion die. The extrusion temperature can be in the range of about 150°C to 200°C. The extruded film of poly(alkylene) copolymer can be extruded between two support films. The resulting construction of support film / poly(alkylene) copolymer film / support film can then be passed through a chilled roll stack to cool and solidify the poly(alkylene) copolymer film. Backing films that are prepared using this method tend to have a relatively uniform thickness and tend to be relatively smooth. The support films are often release liners. Suitable release liners are the same as described above for use during the preparation of the pressure-sensitive adhesive layer. The release liners are typically easily removed after preparation of the backing layer without stretching or damaging the release liner.

The thickness of a film-based backing layer is often selected by balancing the desired load bearing strength and rupture strength against the stretch release force. A greater stretch release force is usually needed as the thickness of the backing layer is increased. Conversely, a lower stretch release forces is needed as the thickness of the backing layer is decreased. The thickness of a film-based backing layer can be, for example, up to 40 mils (1.0 millimeter or 1000 micrometers). As used herein, the term "mil" refers to 0.001 inch and 1 mil is equal to about 0.0025 centimeters or about 0.025 millimeters or about 25 micrometers. In many embodiments, the thickness is up to 30 mils (750 micrometers), up to 20 mils (500 micrometers), up to 10 mils (250 micrometers), up to 8 mils (200 micrometers), up to 6 mils (150 micrometers), or up to 5 mils (125 micrometers). The thickness is often at least 1 mil (0.025 millimeters or 25 micrometers), at least 2 mils (50 micrometers), at least 3 mils (75 micrometers), or at least 4 mils (100 micrometers). Some suitable backing layers have a thickness in the range of 1 mil (25 micrometers) to 20 mils (500 micrometers), in the range of 1 mil (25 micrometers) to 10 mils (250 micrometers), in the range of 1 mil (25 micrometers) to 8 mils (200 micrometers), in the range of 1 mil (25 micrometers) to 7 mils (175 micrometers), in the range of 2 mils (50 micrometers) to 8 mils (200 micrometers), in the range of 3 mils (75 micrometers) to 6 mils (150 micrometers), or in the range of 4 mils (100 micrometers) to 5 mils (125 micrometers).

As prepared, the backing layer is usually a rubbery material and can be slightly tacky. A pressure-sensitive adhesive layer is positioned adjacent to at least one major surface of the backing layer. In many embodiments, a first pressure-sensitive adhesive layer is positioned adjacent to a first major surface of the backing layer and a second pressure-sensitive adhesive layer is positioned adjacent to a second major surface of the backing layer. The second major surface of the backing layer is the surface opposite the first major surface. As used herein, the term "adjacent" with reference to the pressure-sensitive adhesive layer and the backing layer means that the pressure-sensitive adhesive layer contacts the backing layer or is separated from the backing layer by one or more intervening layers. That is, each pressure-sensitive adhesive layer is adhered directly or indirectly to the backing layer. The intervening layer is often a primer layer or a layer resulting from a priming treatment.

The backing layer can be subjected to a priming treatment prior to being positioned adjacent to the at least one pressure-sensitive adhesive layer. The primer treatment tends to increase adhesion between the backing layer and the pressure-sensitive adhesive layer. This increased adhesion is often desirable for a stretch releasing adhesive tape. That is, it is usually desirable that the adhesion of the pressure-sensitive adhesive layer to the backing layer is stronger than the adhesion of the pressure-sensitive adhesive layer to the substrate. Any suitable priming treatment known in the art can be used. For example, the priming treatment can include treatment with a chemical primer composition, treatment with a corona discharge or plasma discharge, exposure to an electron beam or ultraviolet light, acid etching, or combinations thereof.

In some embodiments, the primer treatment includes applying a primer composition to a surface of the backing layer. Any suitable primer composition can be used. The primer composition can include, for example, a reactive chemical adhesive promoter (e.g., the components can react with the backing layer, the adhesive layer, or both). Exemplary primer compositions include those described in U.S. Patent No. 5,677,376 (Groves), incorporated herein by reference in its entirety. That is, the primer composition can include a blend of (1) a block copolymer such as styrene-ethylene/butylene-styrene block copolymer that is modified with maleic acid or maleic anhydride and (2) the polymeric reaction product of monovalent monomer mixture that includes (a) at least one alkyl (meth)acrylate ester of a non-tertiary alcohol having 1 to 14 carbon atoms and (b) at least one nitrogen-containing monomer. The block copolymer can be, for example, those commercially available from Shell Chemical Co. under the trade designation KRATON FG-1901X. Other suitable primer compositions include those commercially available under the trade designation NEOREX (NEOREX R551) from (Wilmington, MA). This primer composition contains waterborne polyurethane.

In many embodiments, the adhesive tape is a dual sided adhesive tape. The backing layer often directly contacts the first and second pressure-sensitive adhesive layers. Alternatively, the backing layer can be separated from the pressure-sensitive adhesive layers with another layer such as a primer layer. As prepared, the adhesive tape often has a first release liner adjacent to the first pressure-sensitive adhesive layer and a second release liner adjacent to the second pressure-sensitive adhesive layer. To use the adhesive tape, each release liner can be removed to expose the pressure adhesive layer for adhering to another surface such as a substrate. The release liners are often different so that one can be removed more readily than the other.

The materials used to prepare the adhesive tape are often selected so that the Young's modulus of each pressure-sensitive adhesive layer is less than that of the backing layer. If the Young's modulus of the adhesive layer is less than that of the backing layer, the adhesive layer will yield during the deformation of the backing layer when stretched and the backing layer is less likely to tear. Additionally, the adhesive layer is often selected to have a higher percent elongation at break than the backing layer. If this condition is met, the pressure adhesive layer is less likely to leave residue on the substrates upon being released from the substrates.

The adhesive tape can be stretched (elongated) in a first direction (e.g., a lengthwise direction) at least 50 percent without breaking. In some embodiments, the adhesive can be stretched at least 100 percent, at least 150 percent, at least 200 percent, at least 300 percent, at least 400 percent, or at least 500 percent without breaking. The backing layer can often be stretched up to 1200 percent, up to 100 percent, up to 800 percent, up to 750 percent, or up to 700 percent without breaking. These relatively large elongation values facilitate stretch releasing of the adhesive tape after being adhered to a substrate.

The adhesive tape, which contains a backing layer and at least one pressure-sensitive adhesive layer, can be formed in any suitable manner. In many embodiments, the backing layer is prepared separately from the pressure-sensitive adhesive layer. After preparation of the backing layer, at least one separately formed pressure-sensitive adhesive layer can be laminated to a major surface of the backing layer. For example, a pressure-sensitive adhesive layer supported by a release liner can be laminated to a backing layer that is optionally supported by a release liner. Often a first pressure-sensitive adhesive layer is laminated to a first major surface of the backing layer and a second pressure-sensitive adhesive layer is laminated to a second major surface (i.e., opposite the first major surface) of the backing layer. For example, a first pressure-sensitive adhesive layer supported by a first release liner can be laminated to the backing layer that is also supported by a release liner. After lamination of the first pressure-sensitive adhesive layer to the backing layer, the release liner supporting the backing layer can be removed. A second pressure-sensitive adhesive layer supported by a second release liner can then be laminated to the surface of the backing layer that was previously in contact with the release liner. This approach is often used, for example, when the backing layer is a poly(alkylene) copolymeric film.

In other embodiments, the backing layer is formed and then the precursor composition used to form the pressure-sensitive adhesive layer is applied to at least one surface of the previously prepared backing layer. That is, the backing layer functions as the support for the deposition of the precursor composition. The precursor composition is polymerized to form a first pressure-sensitive adhesive layer while in contact with the backing layer. If the adhesive tape has two pressure-sensitive adhesive layers, the second pressure-sensitive adhesive layer can be positioned adjacent to the other major surface (i.e., second major surface) of the backing layer by lamination of a separately formed pressure-sensitive adhesive layer. Alternatively, another precursor composition can be applied to the other major surface of the backing layer and polymerized to form the second pressure-sensitive layer while in contact with the backing layer. In this alternative embodiment, the first pressure-sensitive adhesive layer is often positioned adjacent to a first release liner.

In another example of making an adhesive tape with two adhesive layers, the backing layer can be cast between two adhesive layers that are disposed on release liners. That is, the first pressure-sensitive adhesive layer can be prepared on a first release liner, a second pressure-sensitive adhesive layer can be prepared on a second release liner, and the backing layer can be cast between the two adhesive layers. While still warm, the backing layer can be laminated to the first adhesive layer and to the second adhesive layer. No blocking agent or slip agent is needed. The resulting construction can have the following layers: first release liner - first adhesive layer - backing layer - second adhesive layer - second release liner.

In another aspect, an article is provided. The articles include at least one substrate that is adhered to at least one pressure-sensitive adhesive layer. In some embodiments, the article includes a first substrate and an adhesive tape that is adhered to the first substrate. The adhesive tape includes A) a backing layer, B) a first pressure-sensitive adhesive layer that is adjacent to a first major surface of the backing layer, and C) a tab that extends beyond the first substrate. Pulling the tab stretches the adhesive tape and releases the adhesive tape from the first substrate. The adhesive tape is stretchable at least 50 percent in a first direction without breaking. The backing layer and the first pressure-sensitive adhesive layer are the same as described above.

In other embodiments, the article includes a first substrate, a second substrate, and a pressure-sensitive adhesive layer that is positioned between the first substrate and the second substrate. The pressure-sensitive adhesive layer couples the first substrate to the second substrate. The pressure-sensitive adhesive layer includes a tab that extends beyond at least one of the first substrate and the second substrate. Pulling the tab stretches the pressure-sensitive adhesive layer and releases the pressure-sensitive adhesive layer from the first substrate, from the second substrate, or from both the first and second substrate. The pressure-sensitive adhesive layer is stretchable at least 50 percent in a first direction without breaking. The pressure-sensitive adhesive layer is the same as described above.

In still other embodiments, the article includes a first substrate, a second substrate, and an adhesive tape that is positioned between the first substrate and the second substrate. The adhesive tape couples the first substrate to the second substrate. The adhesive tape includes A) a backing layer, B) a first pressure-sensitive adhesive layer that is adjacent to a first major surface of the backing layer and a second pressure-sensitive adhesive layer that is adjacent to a second major surface of the backing layer, and C) a tab that extends beyond at least one of the first substrate and the second substrate. Pulling the tab stretches the adhesive tape and releases the adhesive tape from the first substrate, from the second substrate, or from both the first substrate and the second substrate. The adhesive tape is stretchable at least 50 percent in a first direction without breaking. The adhesive tape is the same as described above.

The coupling step of two substrates with the adhesive tape can include providing the adhesive tape in a form that includes release liners adjacent to each adhesive layer. That is, the adhesive tape can be provided as a construction of layers arranged in the following order: first release liner - first adhesive layer - backing layer - second adhesive layer - second release liner. The first release liner can be removed to expose the first adhesive layer. The exposed first adhesive layer can then be positioned adjacent to the first substrate and adhered directly or indirectly to the first substrate. The second release liner can then be removed to expose the second adhesive layer. The exposed second adhesive layer can then be positioned adjacent to the second substrate and adhered directly or indirectly to the second substrate.

Any suitable substrates can be adhered to any pressure-sensitive adhesive layer described herein. The substrates can provide any desired function, can be formed from any suitable material, and can have any desired flexibility, size, shape, thickness, or aspect ratio. The substrate can be a single layer or can include multiple layers of material such as a support layer, a primer layer, a hard coat layer (e.g., acrylic or polyurethane), a decorative design, or the like. Either substrate or both substrates can be an outer surface layer of another article. Either substrate or both substrates can contain any suitable material such as a polymeric material, glass material, ceramic material, metal-containing material (e.g., metal or metal oxide or metal alloy), or a combination thereof.

Exemplary metal, metal oxide, or metal alloy for use in a substrate can contain indium tin oxide, titanium, nickel, steel, aluminum, copper, zinc, iron, cobalt, silver, gold, platinum, lead, and the like. Exemplary polymeric materials for use in the substrate include polycarbonates, polyesters (e.g., polyethylene terephthalates and polyethylene naphthalates), polyurethanes, poly(meth)acrylates (e.g., polymethyl methacrylates), polyvinyl alcohols, polyvinyl chloride, polyolefins such as polyethylenes, polypropylenes, or poly(cyclic olefins) such as polynorbornene, polyvinyl chlorides, polyimides, cellulose triacetates, acrylonitrile-butadiene-styrene copolymers, epoxies, nylons, and the like.

In some applications, one of the substrates is an outer surface of an article such as a hook, hanger, clip, holder, organizer, caddy, basket, or sign and the second substrate is a surface to which the article is attached. The second substrate can include, for example, a painted surface, glass, wood (e.g., stained or varnished), porcelain, fiberglass composite, plastic, plaster, concrete, brick, granite, ceramic, marble, stainless steel, or the like. The second substrate can be a wall, window, mirror, cabinet, door, bathroom fixture, vehicle, or the like. In other examples, the first substrate is signage and the second substrate is a window or a vehicle. In at least some of these examples, if desired, the adhesive tape can be optically clear or visibly clear (e.g., haze is greater than 5 percent).

The adhesive layers (i.e., those in adhesive tapes or single layers) can be used wet or high humidity environments such as those found in bathrooms. For example, they can be adhered to toilets (e.g., toilet tanks), bathtubs, sinks, and walls. The adhesive layers can be used in showers, locker rooms, steam rooms, pools, hot tubs, and kitchens (e.g., kitchen sinks, dishwashers and back splash areas, refrigerators and coolers). The adhesive layers can be in low temperatures applications including outdoor applications and refrigerators. Useful outdoor applications include bonding articles such as signage to outdoor surfaces such as windows, doors and vehicles.

The adhesive layers (i.e., those in adhesive tapes or single layers) can be used in a variety of constructions and applications. For example, the adhesive layers can be used in mounting applications of various articles to surfaces such as painted drywall, plaster, concrete, glass, ceramic, fiberglass, metal or plastic. Articles that can be mounted include, but are not limited to, wall hangings, organizers, holders, baskets, containers, decorations (e.g., holiday decorations), calendars, posters, dispensers, wire clips, body side molding on vehicles, carrying handles, signage applications such as road signs, vehicle markings, transportation markings, and reflective sheeting. The adhesive layers can be used in various joining and assembling applications including such as adhering at least two containers (e.g., boxes) for later separation. The adhesive layers can be used in various cushioning and sound deadening applications such as, for example, cushioning materials for placement beneath objects, sound insulating sheet materials, vibration dampening, and combinations thereof. The adhesive layers can be used in various closure applications including such as container closures (e.g., box closures, closures for food containers, and closures for beverage containers), diaper closures, and surgical drape closures. The adhesive layers can be used in various thermal insulation applications. The adhesive layers can be used in various sealing applications such as in gaskets for liquids, vapors (e.g., moisture), and dust. The adhesive layers can be used in various labels such as removable labels (e.g., notes, price tags, and identification labels on containers), and in signage. The adhesive layers can be used in various medical applications (e.g., bandages, wound care, and medical device labeling such as in a hospital setting). The adhesive layers can be used in various fastening applications such as fastening one object (e.g., a vase or other fragile object) to another object (e.g., a table or a book shelf). The adhesive layers can be used in various securing applications such as fastening one or more components of a locking mechanism to a substrate (e.g., a child safety lock can be adhered to a cabinet or cupboard). The adhesive layers can be used in various tamper indicating applications (e.g., tamper indicating articles). The adhesive layers can also be incorporated in a variety of other constructions including, but not limited to, abrasive articles (e.g., for sanding), articles for sanding and polishing applications (e.g., buffing pads, disc pads, hand pads, and polishing pads), pavement marking articles, and carpeting (e.g., backing for carpeting).

The adhesive layers (i.e., those in adhesive tapes or single layers) can be provided in any useful form including, e.g., tape, strip, sheet (e.g., perforated sheet), label, roll, web, disc, and kit (e.g., an object for mounting and the adhesive tape used to mount the object). Likewise multiple adhesive articles can also be provided in any suitable form including, e.g., tape, strip, sheet (e.g., perforated sheet), label, roll, web, disc, kit, stack, tablet, and combinations thereof in any suitable package including, e.g., dispenser, bag, box, and carton.

In some articles with an optically clear adhesive tape, the optically clear adhesive tape can be positioned between a first substrate and a second substrate such that the second substrate can be seen by viewing through both the first substrate and the adhesive tape. The second substrate preferably can be viewed without distortion through both the first substrate and the optically clear, stretch releasable adhesive tape. The second substrate and the first substrate can be, for example, optically coupled. As used herein, the term "optically coupled" means that the any air gap between the first substrate and the second substrate has been eliminated. An air gap can lead to mismatching of refractive indexes between substrates. The optical coupling of the substrates often leads to enhanced brightness and enhanced contrast. Further, the coupling of the substrates can provide increased structural support.

At least one of the substrates used in combination with an optically clear stretch releasable adhesive tape is often selected to be optically clear or transparent. The substrate can have a variety of functions such as, for example, providing flexibility, rigidity, strength or support, reflectivity, antireflectivity, polarization, or transmissivity (e.g., selective with respect to different wavelengths). That is, the substrate can be flexible or rigid; reflective or non-reflective; visibly clear, colored but transmissive, or opaque (e.g., not transmissive); and polarizing or non-polarizing.

In other examples, the resulting articles can be an optical element or can be used to prepare an optical element. As used herein, the term "optical element" refers to an article or component that has an optical effect or optical application. The optical element can be used, for example, in an electronic display, projection devices or applications, photonics devices or applications, or graphic devices or applications.

In some of these devices or applications, the first substrate and second substrate can be independently selected from an outer layer of a display (e.g., electronic display), polarizer, touch panel, lens, reflector, diffraction grating, mirror, projection prism, or multilayer optical film. Exemplary substrates include, but are not limited to, the outer layer of liquid crystal displays, electrowetting displays, plasma displays, cathode ray tubes, or touch sensors.

More particularly, an article is provided that includes a first substrate, a second substrate, and a stretch releasable adhesive tape positioned between the first substrate and the second substrate. The first substrate and second substrate are each independently selected from a display, polarizer, touch panel, lens, reflector, diffraction grating, mirror, projection prism, or multilayer optical film. The stretch releasable adhesive tape is optically clear and couples the first substrate to the second substrate. The second substrate is visible when viewed through both the first substrate and the adhesive tape. The stretch releasable adhesive tape includes (A) a backing layer that contains a poly(alkylene) copolymer, (B) a first pressure-sensitive adhesive layer that is adjacent to a first major surface of the backing layer and a second pressure-sensitive adhesive layer that is adjacent to a second major surface of the backing layer, wherein each pressure-sensitive adhesive layer includes an acrylic copolymer and inorganic particles dispersed or suspended in the second acrylic compound, and (C) a tab that extends beyond at least one of the first substrate and the second substrate. The adhesive tape can be stretched to at least 50 percent in a first direction without breaking. For example, the length of the adhesive tape can be increased at least 50 percent without breaking.

In some applications, the first substrate is a protective layer that is coupled to a second substrate that is part of an information display device. The protective layer can be a protective film, a layer of glass, a layer of polycarbonate, or the like. The protective layer can function, for example, as a cover lens for the information display device. Examples of information display devices include devices with a wide range of display area configurations including liquid crystal displays, plasma displays, front and rear projection displays, cathode ray tubes, and signage. Such display area configurations can be employed in a variety of portable and non-portable information display devices including personal digital assistants, cell phones, touch-sensitive screens, wrist watches, car navigation systems, global positioning systems, depth finders, calculators, electronic books, CD or DVD players, projection television screens, computer monitors, notebook computer displays, instrument gauges, instrument panel covers, or signage such as graphic displays. In some applications, the bonding of a rigid cover to the display screen with the elimination of any air gap between them can improve the quality of the displayed image.

In some specific applications, the optically clear, stretch releasable adhesive tape can couple an information display device and a cover lens prepared of glass or polycarbonate. That is, the article can have the following construction: cover lens - optically clear, stretch releasable adhesive tape - information display device. More specifically, the article can be arranged in the following order: cover lens - first optically clear adhesive layer - backing layer - second optically clear adhesive layer - information display device. The information display device can be viewed by looking through both the cover lens and the optically clear, stretch releasable adhesive tape. For example, the first substrate can be a cover lens and the second substrate can be a liquid crystal display. The outer surface of the liquid crystal display is often a polarizer. In other example, the first substrate can be a cover lens and the second substrate can be an electrowetting display with an outer surface that is predominately glass.

The optically clear adhesive tape can be used to couple together more than two substrates. That is, the articles can include more than two substrates and more than one optically clear adhesive tape. For example, the article could be arranged in the following order: first substrate - first optically clear, stretch releasable adhesive tape - second substrate - second optically clear, stretch releasable adhesive tape - third substrate. More specifically, the article would be arranged in the following order: first substrate - first optically clear adhesive layer - first backing layer - second optically clear adhesive layer - second substrate - third optically clear adhesive layer - second backing layer - fourth optically clear adhesive layer - third substrate. The third substrate can be viewed by looking through the first substrate, the first optically clear adhesive layer, the second substrate, and the second optically clear adhesive layer. For example, the first substrate can be a cover lens, the second substrate can be a touch panel, and the third substrate can be an information display device such as a liquid crystal display. Touch panels often have an outer surface of glass, polyester, or indium tin oxide.

Alternatively, the optically clear, stretch releasable adhesive tapes can be used to couple two substrates together and another optically clear adhesive can be used to join additional substrates. For example, the article could be arranged in the following order - first substrate - optically clear adhesive - second substrate - optically clear, stretch releasable adhesive tape - third substrate. As a specific example, the first substrate can be a cover lens, the second substrate can be a touch panel, and the third substrate can be an information display device such as a liquid crystal display. This embodiment uses the stretch releasable adhesive tape only to couple the information display device to the rest of the article. Less expensive components can be coupled using an adhesive that is not stretch releasable.

In other applications, at least one of the substrates is an optical film. Any suitable optical film can be used in the articles. As used herein, the term "optical film" refers to a film that can be used to produce an optical effect. The optical films are typically polymer-containing films that can be a single layer or multiple layers. Some optical films have alternating layers of polymeric material with different indexes of refraction. Other optical films have alternating polymeric layers and metal-containing layers. The optical films are flexible and can be of any suitable thickness. The optical films often are at least partially transmissive, reflective, antireflective, polarizing, optically clear, or diffusive with respect to some wavelengths of the electromagnetic spectrum (e.g., wavelengths in the visible ultraviolet, infrared, or radio frequency regions of the electromagnetic spectrum). Exemplary optical films include, but are not limited to, visible mirror films, color mirror films, solar reflective films, infrared reflective films, ultraviolet reflective films, reflective polarizer films such as a brightness enhancement films and dual brightness enhancement films, absorptive polarizer films, optically clear films, tinted films, and antireflective films. Exemplary optical films are further described in the following patents: U.S. Patent Nos. 6,049,419 (Wheatley et al.), 5,882,774 (Jonza et al.), 6,049,419 (Wheatley et al.), RE 34,605 (Schrenk et al.), 5,579,162 (Bjornard et al.), and 5,360,659 (Arends et al.).

The articles that include the two substrates coupled with the stretch releasable adhesive tape or with a single layer of the pressure-sensitive adhesive layer can be durable. As used herein, the term "durable" means that the articles can be subjected to elevated temperature (e.g., at least 50°C, at least 60°C, at least 70°C, at least 80°C, or at least 85°C) and humidity conditions (e.g., at least 70 percent relative humidity, at least 75 percent relative humidity, at least 80 percent relative humidity, at least 85 percent relative humidity, or at least 90 percent relative humidity) without delamination. The elevated temperature and relative humidity conditions can be maintained for at least 1 day, at least 2 days, at least 3 days, at least 4 days, at least 5 days, at least 6 days, or at least 7 days. For example, the articles can be subjected to conditions such as 60°C and 90 percent relative humidity or 85°C and 85 percent relative humidity for 1 week without delamination. In many embodiments where the adhesive tape is optically clear, the adhesive tape remains optically clear even after exposure to the elevated temperature and humidity conditions. For example, the haze can remain no greater than 5 and the luminous transmission can be at least 90 percent. Preferably no bubbles form in the article and no optical distortions result from being subjected to the elevated temperature and humidity conditions.

Stated differently, the pressure-sensitive adhesive layers that include a crosslinked acrylic copolymer with inorganic particles such as silica particles dispersed or suspended in the acrylic copolymer can typically be removed (debonded) leaving little or no residue. That is, after removal of the adhesive layer the substrate is free or substantially free of the adhesive. For example, the adhesive layer can be adhered to a glass substrate for extended periods such as at least 1 week or at least 4 weeks and then be removed such that the glass substrate is free or substantially free of the adhesive. As used herein, the term "free" when referring to the adhesive residue means that the removal rating is zero as shown in Figure 5A. As used herein, the term "substantially free" when referring to the adhesive residue means that the removal rating is 1 as shown in Figure 5B. In contrast, pressure-sensitive adhesive layers prepared from the acrylic copolymer in the absence of any inorganic particles such as silica particle often do not release cleanly after being adhered to a substrate such as glass. In many instances, the adhesive tape breaks upon attempted removal, the adhesive leaves substantial residue (e.g., cohesive split), or the substrate is damaged by the removal process due to adhesive build (i.e., increased adhesion) over time. In at least some embodiments, the adhesive layers containing inorganic particles dispersed or suspended in the acrylic copolymer display significantly higher static load shear properties comparative to comparable adhesive layers without the inorganic particles.

Additionally, the adhesive tapes or pressure-sensitive adhesive layers preferably do not become yellow when exposed to the elevated temperature and humidity conditions. That is, the adhesive tapes can have resistance of ultraviolet radiation for extended periods of time. Still further, the adhesive tapes can be used under conditions where there is exposure to moisture. The adhesives can often be used in both indoor and outdoor applications.

The dual sided adhesive tape can be adhered to two substrates (i.e., the adhesive tape can be positioned between the two substrates) and then released from one or both substrates by stretching the backing layer and the adhesive layers of the adhesive tape. After being released, adhesive tape can be removed from between the two substrates and the substrates can be separated from each other. The adhesive tape can be constructed so that the first pressure-sensitive adhesive layer can be released from the first substrate prior to completely releasing the second pressure-sensitive adhesive from the second substrate. That is, the adhesive tape can be constructed to provide controlled sequential release from the first substrate and from the second substrate. This can often be accomplished by variation in the composition of the acrylic copolymer included in the first pressure-sensitive adhesive and the second pressure-sensitive adhesive. Alternatively, this can be accomplished by having non-adhesive zones in one of the pressure-sensitive adhesive layers as described in U.S. Patent No. 6,001,471 (Bries et al.).

In some applications, the adhesive tape can be released by stretching in the event that the coupling of the two substrates is defective. Defects during fabrication can result from misalignment of the two substrates, entrapment of bubbles between the two substrates, or formation of patterns or creases. Alternatively, the substrates can be separated to allow at least one of the substrates to be used again. Typically, the stretch releasing adhesive tape can be cleanly removed from between the substrates with little or no visible adhesive residue remaining on either substrate. Additionally, the stretch releasing adhesive tape usually can be removed without damaging the appearance, function, or performance of either substrate. Even though the adhesive tape can be removed easily by stretching, the adhesive tape can provide high load shear adhesion prior to being stretched.

Also, over the lifetime of the device, if it is desirable to remove one of the substrates for replacement or recycling, the two substrates can be separated by stretch releasing the adhesive tape between the substrates. The substrates can be separated without damage to either substrate. This is an advantage over many other separation methods that typically introduce levels of stress than can damage one or both of the substrates. Such separation can be very difficult with many known pressure-sensitive adhesives.

In some applications it may be desirable to use a winding tool to aid the stretch release process and facilitate removal of the adhesive tape from between the two substrates. Such a winding tool can be as simple as a cylinder to which the tab of the adhesive tape is attached. The winding tool can be rotated to permit winding of the adhesive tape as it is stretched. Such a process could be mechanized using a powered roller of sufficient width so that the entire width of the tab can be simultaneously and smoothly pulled to release the adhesive tape from the substrates by zero degree peel. The stress and the rate of strain applied to the adhesive tape by the mechanized device could be controlled to release and remove the adhesive tape without tearing the backing layer and without leaving any adhesive residue on the substrates. The mechanized approach would be particularly advantageous for the decoupling of large substrates such as large format electronic displays or graphics. Vacuum manipulation devices could be used to lift and support the substrates during the decoupling step. By securing the substrates with vacuum manipulation tools, the substrates could be secured without introducing additional compressive force on the adhesive tape that could inhibit or prevent the release and removal of the adhesive tape from between the two substrates. Also, the vacuum manipulation tools could be used to collect the substrates without damage after removal of the adhesive tape.

### EXAMPLES

These examples are for illustrative purposes only. All parts, percentages, and ratios in the examples and the rest of the specification are based on weight, unless noted otherwise. Solvents and other reagents used were obtained from Sigma-Aldrich Chemical Company (Milwaukee, WI) unless otherwise noted.

**Glossary**

| **Material** | **Description** |
|---|---|
| IOA | Iso-octyl acrylate |
| MA | Methyl acrylate |
| AA | Glacial acrylic acid that is commercially available from Dow Chemical (Midland, MI). |
| Thermal Initiator I | The thermal free radical initiator 2,2'-azobis(2-methylbutane nitrile) that is commercially available under the trade designation VAZO 67 from E.I. DuPont Company (Wilmington, DE). |
| Thermal Initiator II | The thermal free radical initiator 2,2'-azobis(isobutyronitrile) free radical initiator that is commercially available under the trade designation VAZO 64 from E.I. DuPont Company (Wilmington, DE). |
| Fumed silica | Hydrophobic fumed silica commercially available under the trade designation AEROSIL R972 from Evonik Industries (Germany). |
| Aerogel Silica Particles | The aerogel silica particles commercially available under the trade designation NANOGEL OBD201 from Cabot Corporation (Billerica, MA) that have an average particle size of approximately 8 nmicrons, have a surface area in the range of 600 to 800 m²/gram, and have pores with an average diameter in the range of 20 to 40 nanometers. |
| Bisamide Crosslinker | The crosslinker 1,1'-isophthalylbis(2-methylaziridine) that is commercially available from Xi'an Modern Chemistry Research Institute of China (Xi'an, China). |

### Test Procedures

### 180° Peel Adhesion Test Method

Samples are tested for 180° peel strength tested according to ASTM D3330/D3330M-04, "Standard Test Method for Peel Adhesion of Pressure-Sensitive Tape at 180° Angle," according to Test Method E on a glass substrate.

### Static Shear Test Method

Static shear is determined according to the method of ASTM D3654-82 entitled, "Holding Power of Pressure-Sensitive Tapes," with the following modifications. The release liner(s), where present, is removed from the test sample. Test samples having the dimensions 0.5 in (inch) x 0.5 in (1.27 cm (centimeter) x 1.27 cm) are adhered to the test substrate through the adhesive composition at 72°F (i.e., 22°C) and 50 % relative humidity by passing a 15 lb (6.8 kg) hand held roller over the length of the sample two times at a rate of 12 in/min (30.48 cm/min). A metal vapor coated polyester film having the dimensions 0.75 in x 4 in (1.91 cm x 10.16 cm) is bonded to one side of the adhesive test sample for the purpose of attaching the load.

The test sample is allowed to dwell on the test substrate for 1 hour at 22°C and 50 % relative humidity; thereafter a 1 kg weight is applied to the metal vapor coated polyester film. The time to failure is recorded in minutes and the average value, calculated pursuant to procedures A and C of section 10.1 of the standard, for all of the test samples is reported. Six samples are tested and the average time to failure of the six samples and the failure mode (where present) of each sample is recorded. A value is reported with a greater than symbol (i.e., >) when at least one of the six samples has not failed at the time the test is terminated.

### Debond Force Test Method

A conventional variable angle peel jig is modified to be used with an IMASS adhesion tester (Imass, Inc., Hingham, MA) to measure low angle debond forces for adhesive tape adhered to a test surface. The jig can securely hold a 5.08 cm x 30.5 cm (2 in x 12 in) substrate. The jig is secured to the IMASS platen. A 1.59 cm x 6.99 cm (5/8 in x 2.75 in) test sample is adhered to the substrate of interest to provide a bond area of 1.59 cm x 5.08 cm (5/8 in x 2 in). The test sample has a 1.59 cm x 1.91 cm (5/8 in x ¾ in) non-adhering tab for clamping to the IMASS tester. A 1.59 cm x 5.08 cm x 0.16 cm (1/16 in) high impact polystyrene flat piece is bonded to the side of a test sample opposite the substrate. The test sample is then conditioned for 24 hours under conditions of 50 % relative humidity and 22.2°C and then debonded at a peel speed of 76.2 cm/min (30 in/min) and at a peel angle of 2°. The average debond force required to stretch the backing for removal from the substrate is recorded in units of ounces per 5/8 in width. Three measurements are made from each substrate and the results are averaged.

### Clean Removability Test Method

The surface of a substrate is visually inspected and the amount of adhesive residue remaining on the test area of the substrate surface is observed and ranked as shown in Figure 5. Figure 5A exemplifies clean release and a rating of zero. Figure 5B exemplifies a very slight PSA residue and a rating of one. Figure 5C exemplifies a slight PSA residue and a rating of two. Figure 5D exemplifies a moderate PSA residue and a rating of three. Figure 5F exemplifies a heavy PSA residue and a rating of four. Figure 5G exemplifies a backing layer rupture and a rating of five.

### Method of Measuring Thickness

The thickness of a sample is measured using an Ono Soki ST-022 digital gauge. Multiple measurements are taken at random locations across the sample and the average thickness is recorded in units of inches (in).

### Preparation of the Pressure-Sensitive Adhesive Compositions (Precursor Compositions)

### Pressure-Sensitive Adhesive Composition 1 (PSA1)

In a glass reaction bottle was placed 102.38 grams isooctyl acrylate, 47.25 grams methyl acrylate, 7.88 grams glacial acrylic acid, 292.5 grams of ethyl acetate, and 0.315 grams of Thermal Initiator 1 (VAZO 67). The reaction bottle and contents were purged with one liter per minute nitrogen for two minutes and sealed. The reaction bottle was placed in a 60°C bath and tumbled therein for 24 hours. An additional 155.9 grams of ethyl acetate was added to the composition for dilution. The resulting pressure-sensitive adhesive composition had a measured solids content equal to 24.9 % and an inherent viscosity, measured in ethyl acetate, of 1.661 dl/g (deciliters per gram).

### Pressure-Sensitive Adhesive Composition 2 (PSA2)

In a glass reaction bottle was placed 102.38 grams isooctyl acrylate, 47.25 grams methyl acrylate, 7.88 grams glacial acrylic acid, 7.88 grams fumed silica (AEROSIL R972), 292.5 grams of ethyl acetate, and 0.315 grams of Thermal Initiator 1 (VAZO 67). The reaction bottle and contents were purged with one liter per minute nitrogen for two minutes and sealed. The reaction bottle was placed in a 60°C bath and tumbled therein for 24 hours. An additional 155.9 grams of ethyl acetate was added to the composition for dilution. The resulting pressure-sensitive adhesive composition had a measured solids content equal to 27.0 % and an inherent viscosity, measured in ethyl acetate, of 1.661 dl/g (deciliters per gram).

### Pressure-Sensitive Adhesive Composition 3 (PSA3)

In a glass reaction bottle was placed 198.81 grams isooctyl acrylate, 12.69 grams glacial acrylic acid, 238.5 grams of ethyl acetate, and 0.423 grams of Thermal Initiator I. The reaction bottle and contents were purged with one liter per minute nitrogen for two minutes and sealed. The reaction bottle was placed in a 60°C bath and tumbled therein for 24 hours. An additional 255.0 grams of ethyl acetate was added to the composition for dilution. The resulting pressure-sensitive adhesive composition had a measured solids content equal to 29.1 % and an inherent viscosity, measured in ethyl acetate, of 1.695 dl/g (deciliters per gram).

### Pressure-Sensitive Adhesive Composition 4 (PSA4)

In a glass reaction bottle was placed 198.81 grams isooctyl acrylate, 12.69 grams glacial acrylic acid, 21.15 grams fumed silica (AEROSIL R972), 238.5 grams of ethyl acetate, and 0.423 grams of Thermal Initiator 1 (VAZO 67). The reaction bottle and contents were purged with one liter per minute nitrogen for two minutes and sealed. The reaction bottle was placed in a 60°C bath and tumbled therein for 24 hours. An additional 255.0 grams of ethyl acetate was added to the composition for dilution. The resulting pressure-sensitive adhesive composition had a measured solids content equal to 29.1 % and an inherent viscosity, measured in ethyl acetate, of 1.541 dl/g (deciliters per gram).

### Pressure-Sensitive Adhesive Composition 5 (PSA5)

In a glass reaction bottle was placed 92.12 grams isooctyl acrylate, 1.88 grams glacial acrylic acid, 7.05 grams fumed silica (AEROSIL R972), 106.0 grams of ethyl acetate, and 0.188 grams of Thermal Initiator 1 (VAZO 67). The reaction bottle and contents were purged with one liter per minute nitrogen for two minutes and sealed. The reaction bottle was placed in a 57°C bath and tumbled therein for 24 hours. An additional 176.0 grams of ethyl acetate was added to the composition for dilution. The resulting pressure-sensitive adhesive composition had a measured solids content equal to 26.0 % and an inherent viscosity, measured in ethyl acetate, of 1.429 dl/g (deciliters per gram).

### Pressure-Sensitive Adhesive Composition 6 (PSA6)

In a glass reaction bottle was placed 92.12 grams isooctyl acrylate, 1.88 grams glacial acrylic acid, 11.75 grams fumed silica (AEROSIL R972), 106.0 grams of ethyl acetate, and 0.188 grams of Thermal Initiator 1 (VAZO 67). The reaction bottle and contents were purged with one liter per minute nitrogen for two minutes and sealed. The reaction bottle was placed in a 57°C bath and tumbled therein for 24 hours. An additional 176.0 grams of ethyl acetate was added to the composition for dilution. The resulting pressure-sensitive adhesive composition had a measured solids content equal to 26.4 % and an inherent viscosity, measured in ethyl acetate, of 1.166 dl/g (deciliters per gram).

### Pressure-Sensitive Adhesive Composition 7 (PSA7)

In a glass reaction bottle was placed 84.60 grams isooctyl acrylate, 9.40 grams glacial acrylic acid, 7.05 grams fumed silica (AEROSIL R972), 106.0 grams of ethyl acetate, and 0.188 grams of Thermal Initiator 1 (VAZO 67). The reaction bottle and contents were purged with one liter per minute nitrogen for two minutes and sealed. The reaction bottle was placed in a 57°C bath and tumbled therein for 24 hours. An additional 176.0 grams of ethyl acetate was added to the composition for dilution. The resulting pressure-sensitive adhesive composition had a measured solids content equal to 25.8 % and an inherent viscosity, measured in ethyl acetate, of 1.436 dl/g (deciliters per gram).

### Pressure-Sensitive Adhesive Composition 8 (PSA8)

In a glass reaction bottle was placed 84.60 grams isooctyl acrylate, 9.40 grams glacial acrylic acid, 11.75 grams fumed silica (AEROSIL R972), 106.0 grams of ethyl acetate, and 0.188 grams of Thermal Initiator 1 (VAZO 67). The reaction bottle and contents were purged with one liter per minute nitrogen for two minutes and sealed. The reaction bottle was placed in a 57°C bath and tumbled therein for 24 hours. An additional 176.0 grams of ethyl acetate was added to the composition for dilution. The resulting pressure-sensitive adhesive composition had a measured solids content equal to 26.2 % and an inherent viscosity, measured in ethyl acetate, of 0.981 dl/g (deciliters per gram).

### Pressure-Sensitive Adhesive Composition 9 (PSAs 9A and 9B)

In each of two glass reaction bottles was placed 88.36 grams isooctyl acrylate, 5.64 grams glacial acrylic acid, 9.40 grams fumed silica (AEROSIL R972), 106.0 grams of ethyl acetate, and 0.188 grams of Thermal Initiator 1 (VAZO 67). The reaction bottles and contents were purged with one liter per minute nitrogen for two minutes and sealed. Bottle 9A was placed in a 57°C bath and tumbled therein for 24 hours while 9B was placed in a 60°C bath and tumbled therein for 24 hours. An additional 176.0 grams of ethyl acetate was added to each composition for dilution. The resulting pressure-sensitive adhesive compositions 9A and 9B had measured solids contents equal to 26.1 % and 26.3%, respectively, and inherent viscosities, measured in ethyl acetate, of 1.428 and 1.049 dl/g (deciliters per gram), respectively.

### Pressure-Sensitive Adhesive Composition 10 (PSA10)

In a glass reaction bottle was placed 158.21 grams isooctyl acrylate, 13.76 grams glacial acrylic acid, 228.0 grams of ethyl acetate, and 0.26 grams of Thermal Initiator II (VAZO 64). The reaction bottle and contents were purged with one liter per minute nitrogen for two minutes and sealed. The reaction bottle was placed in a 60°C bath and tumbled therein for 24 hours. An additional 288 grams of ethyl acetate was added to the composition for dilution. The resulting pressure-sensitive adhesive composition had a measured solids content equal to 24.86 % and an inherent viscosity, measured in ethyl acetate, of 1.293 dl/g (deciliters per gram).

### Pressure-Sensitive Adhesive Composition 11 (PSA11)

In a glass reaction bottle was placed 44.54 grams isooctyl acrylate, 20.56 g methyl acrylate, 4.90 grams glacial acrylic acid, 7.0 grams fumed silica (AEROSIL R972), 130.0 grams of ethyl acetate, and 0.140 grams of Thermal Initiator 1 (VAZO 67). The reaction bottle and contents were purged with one liter per minute nitrogen for two minutes and sealed. The reaction bottle was placed in a 60°C bath and tumbled therein for 24 hours. An additional 111.1 grams ethyl acetate was added to the composition for dilution. The resulting pressure-sensitive adhesive composition had a measured solids content equal to 23.15 % and an inherent viscosity, measured in ethyl acetate, of 1.560 dl/g (deciliters per gram).

### Pressure-Sensitive Adhesive Composition 12 (PSA12)

In a glass reaction bottle was placed 44.54 grams isooctyl acrylate, 20.56 grams methyl acrylate, 4.90 grams glacial acrylic acid (available from Dow Chemical, Michigan), 14.0 grams fumed silica (AEROSIL R972), 130.0 grams of ethyl acetate, and 0.140 grams of Thermal Initiator I (VAZO 67). The reaction bottle and contents were purged with one liter per minute nitrogen for two minutes and sealed. The reaction bottle was placed in a 60°C bath and tumbled therein for 24 hours. An additional 111.1 grams of ethyl acetate was added to the composition for dilution. The resulting pressure-sensitive adhesive composition had a measured solids content equal to 25.14 % and an inherent viscosity, measured in ethyl acetate, of 1.570 dl/g (deciliters per gram).

### Pressure-Sensitive Adhesive Composition 13 (PSA13)

In a glass reaction bottle was placed 89.08 grams isooctyl acrylate, 41.12 g methyl acrylate, 9.80 grams glacial acrylic acid, 21.0 grams fumed silica (AEROSIL R972), 260.0 grams of ethyl acetate, and 0.280 grams of Thermal Initiator I (VAZO 67). The reaction bottle and contents were purged with one liter per minute nitrogen for two minutes and sealed. The reaction bottle was placed in a 60°C bath and tumbled therein for 24 hours. An additional 222.2 grams of ethyl acetate was added to the composition for dilution. The resulting pressure-sensitive adhesive composition had a measured solids content equal to 24.29 % and an inherent viscosity, measured in ethyl acetate, of 1.680 dl/g (deciliters per gram).

### Pressure-Sensitive Adhesive Composition 14 (PSA14)

In a glass reaction bottle was placed 155.66 grams isooctyl acrylate, 13.54 grams glacial acrylic acid, 190.8 grams of ethyl acetate, and 0.338 grams of Thermal Initiator I (VAZO 67). The reaction bottle and contents were purged with one liter per minute nitrogen for two minutes and sealed. The reaction bottle was placed in a 60°C bath and tumbled therein for 24 hours. An additional 319.0 grams of ethyl acetate was added to the composition for dilution. The resulting pressure-sensitive adhesive composition had a measured solids content equal to 24.36 % and an inherent viscosity, measured in ethyl acetate, of 1.637 dl/g (deciliters per gram).

### Pressure-Sensitive Adhesive Composition 15 (PSA15)

In a glass reaction bottle was placed 104.53 grams isooctyl acrylate, 48.24 grams methyl acrylate, 4.73 grams glacial acrylic acid, 7.9 grams fumed silica (AEROSIL R972), 292.5 grams of ethyl acetate, and 0.315 grams of Thermal Initiator I (VAZO 67). The reaction bottle and contents were purged with one liter per minute nitrogen for two minutes and sealed. The reaction bottle was placed in a 60°C bath and tumbled therein for 24 hours. An additional 155.7 grams of ethyl acetate was added to the composition for dilution. The resulting pressure-sensitive adhesive composition had a measured solids content equal to 26.01 % and an inherent viscosity, measured in ethyl acetate, of 1.569 dl/g (deciliters per gram).

### Pressure-Sensitive Adhesive Composition 16 (PSA16)

In a glass reaction bottle was placed 104.53 grams isooctyl acrylate, 48.24 grams methyl acrylate, 4.73 grams glacial acrylic acid, 23.6 grams fumed silica (AEROSIL R972), 292.5 grams of ethyl acetate, and 0.315 grams of Thermal Initiator I (VAZO 67). The reaction bottle and contents were purged with one liter per minute nitrogen for two minutes and sealed. The reaction bottle was placed in a 60°C bath and tumbled therein for 24 hours. An additional 155.7 grams of ethyl acetate was added to the composition for dilution. The resulting pressure-sensitive adhesive composition had a measured solids content equal to 27.79 % and an inherent viscosity, measured in ethyl acetate, of 1.569 dl/g (deciliters per gram).

### Pressure-Sensitive Adhesive Composition 17 (PSA17)

In a glass reaction bottle was placed 100.22 grams isooctyl acrylate, 46.26 grams methyl acrylate, 11.03 grams glacial acrylic acid, 7.9 grams fumed silica (AEROSIL R972), 292.5 grams of ethyl acetate, and 0.315 grams of Thermal Initiator I (VAZO 67). The reaction bottle and contents were purged with one liter per minute nitrogen for two minutes and sealed. The reaction bottle was placed in a 60°C bath and tumbled therein for 24 hours. An additional 155.7 grams of ethyl acetate was added to the composition for dilution. The resulting pressure-sensitive adhesive composition had a measured solids content equal to 26.21 % and an inherent viscosity, measured in ethyl acetate, of 1.642 dl/g (deciliters per gram).

### Pressure-Sensitive Adhesive Composition 18 (PSA18)

In a glass reaction bottle was placed 100.22 grams isooctyl acrylate, 46.26 grams methyl acrylate, 11.03 grams glacial acrylic acid, 23.6 grams fumed silica (AEROSIL R972), 292.5 grams of ethyl acetate, and 0.315 grams of Thermal Initiator I (VAZO 67). The reaction bottle and contents were purged with one liter per minute nitrogen for two minutes and sealed. The reaction bottle was placed in a 60°C bath and tumbled therein for 24 hours. An additional 155.7 grams of ethyl acetate was added to the composition for dilution. The resulting pressure-sensitive adhesive composition had a measured solids content equal to 28.13 % and an inherent viscosity, measured in ethyl acetate, of 1.642 dl/g (deciliters per gram).

### Pressure-Sensitive Adhesive Composition 19 (PSA19)

In a glass reaction bottle was placed 102.38 grams isooctyl acrylate, 47.25 grams methyl acrylate, 7.88 grams glacial acrylic acid, 15.8 grams fumed silica (AEROSIL R972), 292.5 grams of ethyl acetate, and 0.315 grams of Thermal Initiator I (VAZO 67). The reaction bottle and contents were purged with one liter per minute nitrogen for two minutes and sealed. The reaction bottle was placed in a 60°C bath and tumbled therein for 24 hours. An additional 155.7 grams of ethyl acetate was added to the composition for dilution. The resulting pressure-sensitive adhesive composition had a measured solids content equal to 27.08 % and an inherent viscosity, measured in ethyl acetate, of 1.620 dl/g (deciliters per gram).

### Preparation of Backing Layers

### Backing Layer 1

XMAX 161.14 is a trade designation for a 1.8 mil linear low density polyethylene (LLDPE) film manufactured at Pliant Corporation, Chippewa Falls, WI. Film layers were heat laminated at 190F and 25 psi lamination pressure to form an approximate 5 mil thickness. The LLDPE is a copolymer of ethene and octene. Both sides of the film were treated with a chemical primer prepared according to Example 15 of U.S. Patent No. 5,677,376 (Groves) prior to adhesive lamination.

### Backing Layer 2

FlexSol Lot ER276037 is a 4.9 mil linear low density polyethylene film manufactured at FlexSol Packaging Corporation, Statesville, NC. Both sides of the film were treated with a chemical primer prepared according to Example 15 of U.S. Patent No. 5,677,376 (Groves) prior to adhesive lamination.

### Backing Layer 3

The 36 mil multi-layer composite foam laminate backing included a polyethylene vinyl acetate copolymer foam having a density of 6 pounds per cubic foot laminated between two pieces of 0.0046 cm (1.80 mil) thick linear low-density polyethylene film. The film layers of the composite foam laminate are treated with a chemical primer prepared according to Example 15 of U.S. Patent No. 5,677,376 (Groves) prior to adhesive lamination.

### Release Liner

The SYL-OFF Q2-7786 release liner is a 35 pound bleached Kraft paper sandwiched between two 11.5 pound high density polyethylene corona treated film layers one of which includes a matte finish and the other of which includes a gloss finish (Loparex, Willowbrook, Illinois). The exposed surface of the matte finish polyethylene film layer includes approximately 2.5 grams per square meter (gsm) of the reaction product of Q2-7786 fluorosilicone polymer (Dow Corning Corp., Midland, Michigan), Q2-7560 crosslinking agent (Dow Corning Corp.) and platinum-based catalyst (Dow Corning Corp.) and the exposed surface of the gloss finish polyethylene film layer includes approximately 1.5 grams of the reaction product of Q2-7785 fluorosilicone polymer (Dow Corning Corp.), Q2-7560 crosslinking agent and platinum catalyst.

### Examples C1, 2, C3, and 4

Pressure-sensitive adhesive layers were prepared by adding the Bisamide Crosslinker to Pressure-Sensitive Adhesive Compositions 1 and 2 and mixing for 30 minutes. Each adhesive then was coated on the fluorosilicone treated surface of the Release Liner using a laboratory knife coater. Each adhesive was then dried in a force air oven at 70°C for approximately 10 minutes. Each pressure-sensitive adhesive film was subsequently dry laminated onto each side of Backing Layer 1 using a laboratory laminator operating at 12 inches per minute and 25 psi nip pressure to form an adhesive tape with the adhesive layers covered with a release liner.

Test strips were then die-cut from the adhesive tapes. The pressure-sensitive adhesive compositions, the dry adhesive film thickness, and peel adhesion properties of each stretch release adhesive composition of Examples 1-4 are set forth in Table 1. Peel Adhesion A is measured on the liner side and Peel Adhesion B is measured on the exposed side of the adhesive layer. The debond force, clean removability residue rating, and static shear properties on glass of each stretch release adhesive strip construction of Examples 1-4 are set forth in Table 2. Debond Force A (units are ounces per 0.625 inch width) and Residue A were measured after an ambient dwell of 24 hours. Debond Force B (units are ounces per 0.625 inch width) and Residue B were measured after 120°F dwell of 7 days.

Examples C1 and C3 are comparative examples. Examples 2 and 4 are working examples.

**Table 1**

| **Ex.** | **PSA** | **Composition,** **wt**% | **Fumed Silica, wt%** | **Bisamide Crosslinker** | **Thickness, (mil)** | **Peel Adhesion A, (oz/in width)** | **Peel Adhesion B, (oz/in width)** |
|---|---|---|---|---|---|---|---|
| | PSA | 65:30:5 | | | | | |
| C1 | 1 | IOA/MA/AA | 0 | 0.05 | 2.1 | 75.93 | 63.26 |
| | PSA | 65:30:5 | | | | | |
| 2 | 2 | IOA/MA/AA | 10 | 0.05 | 3.2 | 79.08 | 76.78 |
| | PSA | 65:30:5 | | | | | |
| C3 | 1 | IOA/MA/AA | 0 | 0.15 | 2.5 | 70.91 | 62.89 |
| | PSA | 65:30:5 | | | | | |
| 4 | 2 | IOA/MA/AA | 10 | 0.15 | 2.4 | 61.83 | 62.28 |

**Table 2**

| **Ex.** | **Debond Force A** | **Residue A** | **Debond Force B** | **Residue B** | **Shear, (minutes)** |
|---|---|---|---|---|---|
| C1 | 61.7 | 3.5 | 80.3 | 5.0 | 1972 |
| 2 | 67.3 | 0.3 | 70.3 | 0.3 | 7760 |
| C3 | 63.1 | 3.2 | 73.3 | 2.2 | 1361 |
| 4 | 64.7 | 0.2 | 72.2 | 0.5 | > 12784 |

### Example C5, 6, C7, and 8

Pressure-sensitive adhesive layers were prepared by adding the Bisamide Crosslinker to Pressure-Sensitive Adhesive Compositions 3 and 4 and mixing for 30 minutes. Each adhesive then was coated on the fluorosilicone treated surface of the Release Liner using a laboratory knife coater. Each adhesive layer was then dried in a force air oven at 70°C for approximately 10 minutes. Each pressure-sensitive adhesive film was subsequently dry laminated onto each side of a Backing Layer I using a laboratory laminator operating at 12 inches per minute and 25 psi nip pressure to form an adhesive tape with the adhesive layers covered with a release liner.

Test strips were then die-cut from the adhesive tapes. The pressure-sensitive adhesive compositions, the dry adhesive film thickness, and peel adhesion properties of each stretch release adhesive composition of Examples 5- 8 are set forth in Table 3. Peel Adhesion A is measured on the liner side and Peel Adhesion B is measured on the exposed side of the adhesive layer. The debond force, clean removability residue rating, and static shear properties on glass of each stretch release adhesive strip construction of Examples 5 - 8 are set forth in Table 4. Debond Force A (units are ounces per 0.625 inch width) and Residue A were measured after an ambient dwell of 24 hours. Debond Force B (units are ounces per 0.625 inch width) and Residue B were measured after 120°F dwell of 7 days.

Examples C5 and C7 are comparative examples. Examples 6 and 8 are working examples.

**Table 3**

| **Ex.** | **PSA** | **Composition, wt%** | **Fumed Silica, wt%** | **Bisamide Crosslinker** | **Thickness, (mil)** | **Peel Adhesion A, (oz/in width)** | **Peel Adhesion B, (oz/in width)** |
|---|---|---|---|---|---|---|---|
| | PSA | 94:6 | | | | | |
| C5 | 3 | IOA/AA | 0 | 0.05 | 2.5 | 60.87 | 53.77 |
| | PSA | 94:6 | | | | | |
| 6 | 4 | IOA/AA | 10 | 0.05 | 2.5 | 64.16 | 40.97 |
| | PSA | 94:6 | | | | | |
| C7 | 3 | IOA/AA | 0 | 0.15 | 2.5 | 49.69 | 43.23 |
| | PSA | 94:6 | | | | | |
| 8 | 4 | IOA/AA | 10 | 0.15 | 2.4 | 56.81 | 56.93 |

**Table 4**

| **Ex.** | **Debond Force A** | **Residue A** | **Debond Force B** | **Residue B** | **Shear, (minutes)** |
|---|---|---|---|---|---|
| C5 | 67.7 | 4.0 | 71.7 | 5.0 | 1719 |
| 6 | 62.7 | 0.3 | 70.8 | 2.4 | > 19919 |
| C7 | 62.4 | 3.5 | 71.5 | 5.0 | 363 |
| 8 | 62.5 | 0.3 | 69.2 | 0.5 | > 33996 |

### Example 9 - 17

Pressure-sensitive adhesive layers were prepared by adding the Bisamide Crosslinker to Pressure-Sensitive Adhesive Compositions 5 - 9 and mixing for 30 minutes. Each adhesive then was coated on the fluorosilicone treated surface of the Release Liner using a laboratory knife coater. Each adhesive layer was then dried in a force air oven at 70°C for approximately 10 minutes. Each pressure-sensitive adhesive film was subsequently dry laminated onto each side of Backing Layer II using a laboratory laminator operating at 12 inches per minute and 25 psi nip pressure to form an adhesive tape with the adhesive layers covered with a release liner.

Test strips were then die-cut from the adhesive tapes. The pressure-sensitive adhesive compositions, the dry adhesive film thickness, and peel adhesion properties of each stretch release adhesive composition of Examples 9 - 17 are set forth in Table 5. Peel Adhesion A is measured on the liner side and Peel Adhesion B is measured on the exposed side of the adhesive layer. The debond force, clean removability residue rating, and static shear properties on glass of each stretch release adhesive strip construction of Examples 9-17 are set forth in Table 6. Debond Force A (units are ounces per 0.625 inch width) and Residue A were measured after an ambient dwell of 24 hours. Debond Force B (units are ounces per 0.625 inch width) and Residue B were measured after 120°F dwell of 7 days.

Examples 9 to 17 are working examples.

**Table 5**

| **Ex.** | **PSA** | **Composition, wt%** | **Fumed Silica, wt%** | **Bisamide Crosslinker** | **Thickness, (mil)** | **Peel Adhesion A, (oz/in width)** | **Peel Adhesion B, (oz/in width)** |
|---|---|---|---|---|---|---|---|
| | PSA | 98:2 | | | | | |
| 9 | 5 | IOA/AA | 7.5 | 0.10 | 2.4 | 24.5 | 27.6 |
| | PSA | 98:2 | | | | | |
| 10 | 6 | IOA/AA | 12.5 | 0.10 | 2.4 | 32.6 | 36.8 |
| | PSA | 90:10 | | | | | |
| 11 | 7 | IOA/AA | 7.5 | 0.10 | 2.4 | 53.0 | 59.8 |
| | PSA | 90:10 | | | | | |
| 12 | 8 | IOA/AA | 12.5 | 0.10 | 2.3 | 37.9 | 39.9 |
| | PSA | 98:2 | | | | | |
| 13 | 5 | IOA/AA | 7.5 | 0.20 | 2.4 | 15.5 | 22.1 |
| | PSA | 98:2 | | | | | |
| 14 | 6 | IOA/AA | 12.5 | 0.20 | 2.3 | 22.9 | 28.9 |
| | PSA | 90:10 | | | | | |
| 15 | 7 | IOA/AA | 7.5 | 0.20 | 2.3 | 50.8 | 54.1 |
| | PSA | 90:10 | | | | | |
| 16 | 8 | IOA/AA | 12.5 | 0.20 | 2.4 | 39.0 | 46.9 |
| | PSA | 94:6 | | | | | |
| 17 | 9A | IOA/AA | 10.0 | 0.15 | 2.4 | 39.3 | 52.2 |

**Table 6**

| **Ex.** | **Debond Force A** | **Residue A** | **Debond Force B** | **Residue B** | **Shear, (minutes)** |
|---|---|---|---|---|---|
| 9 | 70.8 | 0.2 | 76.3 | 1.4 | 71 |
| 10 | 71.7 | 0.3 | 73.6 | 0.3 | 76 |
| 11 | 86.8 | 0.3 | 91.1 | 1.0 | > 30961 |
| 12 | 83.6 | 0.0 | 86.6 | 0.3 | > 56416 |
| 13 | 67.9 | 0.0 | 71.4 | 0.3 | 30 |
| 14 | 66.3 | 0.0 | 74.0 | 0.1 | 216 |
| 15 | 84.1 | 0.2 | 90.8 | 0.3 | > 37186 |
| 16 | 87.5 | 0.0 | 91.3 | 0.3 | > 56420 |
| 17 | 75.9 | 0.0 | 79.1 | 0.3 | 10039 |

### Example 18, 19, C20, and C21

Pressure-sensitive adhesive layers were prepared by first adding fumed silica (AEROSIL R972) at addition levels of 0, 8, 10 and 12 weight % with mixing. followed with addition of the Bisamide Crosslinker to Pressure-Sensitive Adhesive Composition 10 and mixing for 30 minutes. Each adhesive was then dried in a force air oven at 70°C for approximately 10 minutes. Each pressure-sensitive adhesive film was subsequently dry laminated onto each side of Backing Layer I using a laboratory laminator operating at 12 inches per minute and 25 psi nip pressure to form an adhesive tape with the adhesive layers covered with a release liner.

Test strips were then die-cut from the adhesive tape. The pressure-sensitive adhesive compositions, the dry adhesive film thickness, and peel adhesion properties of each stretch release adhesive composition of Examples 18 - 21 are set forth in Table 7. Peel Adhesion A is measured on the liner side and Peel Adhesion B is measured on the exposed side of the adhesive layer. The debond force, clean removability residue rating, and static shear properties on glass of each stretch release adhesive strip construction of Examples 18 - 21 are set forth in Table 8. Debond Force A (units are ounces per 0.625 inch width) and Residue A were measured after an ambient dwell of 24 hours. Debond Force B (units are ounces per 0.625 inch width) and Residue B were measured after 120°F dwell of 7 days.

Examples 18 to 20 are working examples and C21 is a comparative example.

**Table 7**

| **Ex.** | **PSA** | **Composition, wt%** | **Fumed Silica, wt%** | **Bisamide Crosslinker** | **Thickness, (mil)** | **Peel Adhesion A, (oz/in width)** | **Peel Adhesion B, (oz/in width)** |
|---|---|---|---|---|---|---|---|
| | | 92:8 | | | | | |
| 18 | PSA10 | IOA/AA | 8 | 0.15 | 2.4 | 56.80 | 51.90 |
| | | 92:8 | | | | | |
| 19 | PSA10 | IOA/AA | 10 | 0.15 | 2.3 | 53.09 | 53.68 |
| | | 92:8 | | | | | |
| 20 | PSA10 | IOA/AA | 12 | 0.15 | 2.3 | 46.06 | 49.56 |
| | | 92:8 | | | | | |
| C21 | PSA10 | IOA/AA | 0 | 0.15 | 2.6 | 56.48 | 51.89 |

**Table 8**

| **Ex.** | **Debond Force A** | **Residue A** | **Debond Force B** | **Residue B** | **Shear**, **(minutes)** |
|---|---|---|---|---|---|
| 18 | 71.7 | 0.0 | 71.2 | 0.3 | > 12369 |
| 19 | 76.2 | 0.2 | 74.4 | 0.0 | > 76917 |
| 20 | 71.8 | 0.0 | 73.6 | 0.0 | >83143 |
| C21 | 70.5 | 3.0 | 72.6 | 3.0 | 765 |

### Example 22 - 26

Pressure-sensitive adhesive films were prepared by adding the Bisamide Crosslinker to Pressure-Sensitive Adhesive Compositions 11, 12 and 13 and mixing for 30 minutes. Each adhesive was coated on the fluorosilicone treated surface of the Release Liner using a laboratory knife coater. Each adhesive was then dried in a force air oven at 70°C for approximately 10 minutes. Each pressure-sensitive adhesive layer was subsequently dry laminated onto each side of Backing Layer I using a laboratory laminator operating at 12 inches per minute and 25 psi nip pressure to form an adhesive tape with the adhesive layers covered with a release liner.

Test strips were then die-cut from the adhesive tapes. The pressure-sensitive adhesive compositions, the dry adhesive film thickness, and peel adhesion properties of each stretch release adhesive composition of Examples 22-26 are set forth in Table 9. Peel Adhesion A is measured on the liner side and Peel Adhesion B is measured on the exposed side of the adhesive layer. The debond force, clean removability residue rating, and static shear properties on glass of each stretch release adhesive strip construction of Examples 22-26 are set forth in Table 10. Debond Force A (units are ounces per 0.625 inch width) and Residue A were measured after an ambient dwell of 24 hours. Debond Force B (units are ounces per 0.625 inch width) and Residue B were measured after 120°F dwell of 7 days.

Examples 22 to 26 are working examples.

**Table 9**

| **Ex.** | **PSA** | **Composition, wt%** | **Fumed Silica, wt%** | **Bisamide Crosslinker** | **Thickness, (mil)** | **Peel Adhesion A, (oz/in width)** | **Peel Adhesion B, (oz/in width)** |
|---|---|---|---|---|---|---|---|
| | | 66.6/29.4/7.0 | | | | | |
| 22 | PSA11 | IOA/MA/AA | 10 | 0.10 | 2.9 | 73.6 | 73.5 |
| | | 66.6/29.4/7.0 | | | | | |
| 23 | PSA12 | IOA/MA/AA | 20 | 0.10 | 3.1 | 26.0 | 36.7 |
| | | 66.6/29.4/7.0 | | | | | |
| 24 | PSA11 | IOA/MA/AA | 10 | 0.20 | 2.6 | 72.5 | 72.1 |
| | | 66.6/29.4/7.0 | | | | | |
| 25 | PSA12 | IOA/MA/AA | 20 | 0.20 | 2.4 | 27.2 | 38.1 |
| | | 66.6/29.4/7.0 | | | | | |
| 26 | PSA13 | IOA/MA/AA | 15 | 0.15 | 2.7 | 58.8 | 49.4 |

**Table 10**

| **Ex.** | **Debond Force A** | **Residue A** | **Debond Force B** | **Residue B** | **Shear, (minutes)** |
|---|---|---|---|---|---|
| 22 | 76.0 | 0.2 | 75.6 | 0.3 | 5211 |
| 23 | 78.1 | 0.0 | 88.8 | 0.3 | > 49201 |
| 24 | 71.7 | 0.0 | 76.1 | 0.4 | > 90615 |
| 25 | 76.1 | 0.3 | 82.1 | 0.6 | > 90615 |
| 26 | 71.4 | 0.0 | 80.0 | 0.3 | > 90615 |

### Example C27, 28, 29, and 30

Pressure-sensitive adhesive layers were prepared by first adding the Aerogel Silica Particles at addition levels of 0, 8, 10 and 12 weight % with mixing, followed with addition of the Bisamide Crosslinker to Pressure-Sensitive Adhesive Composition 14 and mixing for 30 minutes. Each adhesive was coated on the fluorosilicone treated surface of the Release Liner using a laboratory knife coater. Each adhesive was then dried in a force air oven at 70°C for approximately 10 minutes. Each pressure-sensitive adhesive film was subsequently dry laminated onto each side of Backing Layer I using a laboratory laminator operating at 12 inches per minute and 25 psi nip pressure to form an adhesive tape with the adhesive layers covered with a release liner.

Test strips were then die-cut from the adhesive tapes. The pressure-sensitive adhesive compositions, the dry adhesive film thickness, and peel adhesion properties of each stretch release adhesive composition of Examples 27-30 are set forth in Table 11. Peel Adhesion A is measured on the liner side and Peel Adhesion B is measured on the exposed side of the adhesive layer. The debond force, clean removability residue rating, and static shear properties on glass of each stretch release adhesive strip construction of Examples 27-30 are set forth in Table 12. Debond Force A (units are ounces per 0.625 inch width) and Residue A were measured after an ambient dwell of 4 weeks. Debond Force B (units are ounces per 0.625 inch width) and Residue B were measured after 120°F dwell of 4 weeks.

Example C27 is a comparative example and examples 28 to 30 are working examples.

**Table 11**

| **Ex.** | **PSA** | **Composition, wt%** | **Aerogel Silica, wt%** | **Bisamide Crosslinker** | **Thickness, (mil)** | **Peel Adhesion A, (oz/in width)** | **Peel Adhesion B, (oz/in width)** |
|---|---|---|---|---|---|---|---|
| | PSA | 92:8 | | | | | |
| C27 | 14 | IOA/AA | 0 | 0.15 | 2.7 | 62.8 | 57.3 |
| | PSA | 92:8 | | | | | |
| 28 | 14 | IOA/AA | 8 | 0.15 | 2.6 | 59.4 | 52.7 |
| | PSA | 92:8 | | | | | |
| 29 | 14 | IOA/AA | 10 | 0.15 | 2.5 | 56.6 | 46.6 |
| | PSA | 92:8 | | | | | |
| 30 | 14 | IOA/AA | 12 | 0.15 | 2.6 | 55.5 | 56.8 |

**Table 12**

| **Ex.** | **Debond Force A** | **Residue A** | **Debond Force B** | **Residue B** | **Shear, (minutes)** |
|---|---|---|---|---|---|
| C27 | 67.6 | 2.1 | 85.3 | 3.6 | 416 |
| 28 | 63.3 | 0.1 | 75.0 | 2.2 | > 64783 |
| 29 | 63.6 | 0.3 | 72.7 | 2.0 | > 89803 |
| 30 | 66.4 | 0.4 | 67.8 | 0.5 | > 89803 |

### Example 31-35

Pressure-sensitive adhesive layers were prepared by adding the Bisamide Crosslinker to Pressure-Sensitive Adhesive Compositions 15 - 19 and mixing for 30 minutes. Each adhesive was coated on the fluorosilicone treated surface of the Release Liner using a laboratory knife coater. Each adhesive was then dried in a force air oven at 70°C for approximately 10 minutes. Each pressure-sensitive adhesive film was subsequently dry laminated onto each side of Backing Layer III using a laboratory laminator operating at 12 inches per minute and 25 psi nip pressure to form an adhesive tape with the adhesive layers covered with a release liner.

Test strips were then die-cut from the adhesive tapes. The pressure-sensitive adhesive compositions, the dry adhesive film thickness, and peel adhesion properties of each stretch release adhesive composition of Examples 31-35 are set forth in Table 13. Peel Adhesion A is measured on the liner side and Peel Adhesion B is measured on the exposed side of the adhesive layer.

**Table 13**

| **Ex.** | **PSA** | **Composition, wt%** | **Fumed Silica, wt%** | **Bisamide Crosslinker** | **Thickness (mil)** | **Peel Adhesion A, (oz/in width)** | **Peel Adhesion B, (oz/in width)** | **Shear, (minutes)** |
|---|---|---|---|---|---|---|---|---|
| | | 66.4/30.6/3 | | | | | | |
| 31 | PSA15 | IOA/MA/AA | 5 | 0.10 | 2.5 | 48.7 | 66.7 | 191 |
| | | 66.4/30.6/3 | | | | | | |
| 32 | PSA16 | IOA/MA/AA | 15 | 0.10 | 2.7 | 54.3 | 58.2 | 875 |
| | | 63.6/29.4/7 | | | | | | |
| 33 | PSA17 | IOA/MA/AA | 5 | 0.10 | 2.5 | 71.2 | 74.8 | > 2142 |
| | | 63.6/29.4/7 | | | | | | |
| 34 | PSA18 | IOA/MA/AA | 15 | 0.10 | 3.0 | 56.8 | 45.1 | >19199 |
| | | 65/30/5 | | | | | | |
| 35 | PSA19 | IOA/MA/AA | 10 | 0.10 | 2.4 | 63.4 | 65.8 | > 1223 |

### Example C36, 37, 38, and 39

Pressure-sensitive adhesive films were prepared by adding the Bisamide Crosslinker to Pressure-Sensitive Adhesive Composition 9 and mixing for 30 minutes. Each adhesive was coated on the fluorosilicone treated surface of the Release Liner using a laboratory knife coater. Each adhesive was then dried in a force air oven at 70°C for approximately 10 minutes. Each pressure-sensitive adhesive layer was subsequently dry laminated onto each side of Backing Layer I using a laboratory laminator operating at 12 inches per minute and 25 psi nip pressure to form an adhesive tape with the adhesive layers covered with a release liner.

Test strips were then die-cut from the adhesive tapes. The pressure-sensitive adhesive compositions, the dry adhesive film thickness, and peel adhesion properties of each stretch release adhesive composition of Examples C36, 37, 38, and 39 are set forth in Table 14. Peel Adhesion A is measured on the liner side and Peel Adhesion B is measured on the exposed side of the adhesive layer. The debond force, clean removability residue rating, and static shear properties on glass of each stretch release adhesive strip construction of Examples C36, 37, 38, and 39 are set forth in Table 15. Debond Force A (units are ounces per 0.625 inch width) and Residue A were measured after an ambient dwell of 7 days. Debond Force B (units are ounces per 0.625 inch width) and Residue B were measured after 120°F dwell of 7 days. Static shear test samples were allowed to dwell on the test substrate for 5 days at 22°C and 50 % relative humidity; thereafter a 1 kg weight was applied to the metal vapor coated polyester film.

Examples 37 to 39 are working examples and C36 is a comparative example.

**Table 14**

| **Ex.** | **PSA** | **Composition wt%** | **Fumed Silica, wt%** | **Bisamide Crosslinker** | **Thickness, (mil)** | **Peel Adhesion A, (oz/in width)** | **Peel Adhesion B, (oz/in width)** |
|---|---|---|---|---|---|---|---|
| C36 | PSA9B | 94:6 IOA/AA | 10 | 0.00 | 2.2 | 59.5 | 48.0 |
| 37 | PSA9B | 94:6 IOA/AA | 10 | 0.15 | 2.6 | 51.1 | 42.3 |
| 38 | PSA9B | 94:6 IOA/AA | 10 | 0.30 | 2.6 | 44.0 | 35.7 |
| 39 | PSA9B | 94:6 IOA/AA | 10 | 0.50 | 2.6 | 41.0 | 35.6 |

**Table 15**

| **Ex.** | **Debond Force A** | **Residue A** | **Debond Force B** | **Residue B** | **Shear, (minutes)** |
|---|---|---|---|---|---|
| C36 | 65.1 | 0.7 | 71.2 | 1.5 | 187 |
| 37 | 66.4 | 0.3 | 67.9 | 0.3 | >19910 |
| 38 | 67.0 | 0.1 | 67.3 | 0.3 | 4472 |
| 39 | 65.6 | 0.1 | 67.8 | 0.2 | >7224 |

## Claims

1. An adhesive tape comprising:
a backing layer; and
at least one pressure-sensitive adhesive layer positioned adjacent to at least one major surface of the backing layer, wherein the pressure-sensitive adhesive layer comprises
1) an acrylic copolymer comprising a crosslinked reaction product of a curable composition comprising
a) an acrylic precursor that is an at least partially polymerized reaction product of
i) a monovalent monomer mixture comprising
(1) a polar monomer having an acidic group or a salt thereof; and
(2) at least one alkyl (meth)acrylate with an alkyl group having at least 4 carbon atoms; and
ii) a thermal initiator for a free radical polymerization reaction; and
b) a crosslinker having at least two aziridinyl groups; and
2) inorganic particles suspended or dispersed in the acrylic copolymer,
wherein the adhesive tape is stretchable at least 50 percent in a first direction without breaking.

2. The adhesive tape of claim 1, wherein the backing layer comprises a poly(alkylene) copolymer.

3. The adhesive tape of claim 2, wherein the poly(alkylene) copolymer is a polymerized reaction product of a alkene mixture comprising 1) a first alkene selected from ethene, propene, or a mixture thereof and 2) a second alkene selected from a 1,2-alkene having 4 to 8 carbon atoms.

4. The adhesive tape of claim 1 or 2, wherein the adhesive tape comprises the backing layer, a first pressure-sensitive adhesive layer adjacent to a first major surface of the backing layer, and a second pressure-sensitive adhesive layer adjacent to a second major surface of the backing layer.

5. The adhesive tape of any one of claims 1 to 4, wherein the inorganic particles comprise silica.

6. The adhesive tape of any one of claims 1 to 5, wherein the inorganic particles are present in an amount in the range of 1 to 25 weight percent based on a weight of the acrylic copolymer.

7. The adhesive tape of any one of claim 1 to 6, wherein the backing layer comprises a polymeric foam.

8. The adhesive tape of any one of claims 1 to 7, further comprising a first release liner adjacent to the first pressure-sensitive adhesive layer opposite the backing layer and a second release liner adjacent to the second pressure-sensitive adhesive layer opposite the backing layer.

9. The adhesive tape of any one of claims 1 to 8, wherein the adhesive tape is stretchable at least 300 percent in the first direction without breaking.

10. An article comprising:
a first substrate;
a second substrate; and
an adhesive tape positioned between the first substrate and the second substrate, wherein the adhesive tape couples the first substrate to the second substrate, the adhesive tape comprising
A) a backing layer;
B) a first pressure-sensitive adhesive layer that is adjacent to a first major surface of the backing layer and a second pressure-sensitive adhesive layer that is adjacent to a second major surface of the backing layer, wherein the first pressure-sensitive adhesive layer and the second pressure-sensitive adhesive layer each comprise
1) an acrylic copolymer comprising a crosslinked reaction product of a curable composition comprising
a) an acrylic precursor that is an at least partially polymerized reaction product of
i) a monovalent monomer mixture comprising
(1) a polar monomer having an acidic group or a salt thereof; and
(2) at least one alkyl (meth)acrylate with an alkyl group having at least 4 carbon atoms; and
ii) a thermal initiator for a free radical polymerization reaction; and
b) a crosslinker having at least two aziridinyl groups; and
2) inorganic particles suspended or dispersed in the acrylic copolymer; and
C) a tab that extends beyond at least one of the first substrate and the second substrate, wherein pulling the tab stretches the adhesive tape and releases the adhesive tape from the first substrate, from the second substrate, or from both the first substrate and the second substrate, wherein the adhesive tape is stretchable to at least 50 percent in a first direction without breaking when the tab is pulled.

11. The article of claim 10, wherein the backing layer comprises a polymeric foam or a polymeric film.

12. The article of claim 10 or 11, wherein the backing layer comprises a poly(alkylene) copolymer that is a polymerized reaction product of a alkene mixture comprising 1) a first alkene selected from ethene, propene, or a mixture thereof and 2) a second alkene selected from a 1,2-alkene having 4 to 8 carbon atoms.

13. An article comprising:
a first substrate;
an adhesive tape adhered to the first substrate, the adhesive tape comprising
A) a backing layer;
B) a pressure-sensitive adhesive layer that is adjacent to a first major surface of the backing layer, wherein the pressure-sensitive adhesive layer comprises
1) an acrylic copolymer comprising a crosslinked reaction product of a curable composition comprising
a) an acrylic precursor that is an at least partially polymerized reaction product of
i) a monovalent monomer mixture comprising
(1) a polar monomer having an acidic group or a salt thereof; and
(2) at least one alkyl (meth)acrylate with an alkyl group having at least 4 carbon atoms; and
ii) a thermal initiator for a free radical polymerization reaction; and
b) a crosslinker having at least two aziridinyl groups; and
2) inorganic particles suspended or dispersed in the acrylic copolymer; and
C) a tab that extends beyond the first substrate, wherein the adhesive tape is stretchable to at least 50 percent in a first direction without breaking when the tab is pulled.

14. An article comprising:
a first substrate;
a second substrate; and
a pressure-sensitive adhesive layer positioned between the first substrate and the second substrate, wherein the pressure-sensitive adhesive layer couples the first substrate to the second substrate, the pressure-sensitive adhesive layer comprising
1) an acrylic copolymer comprising a crosslinked reaction product of a curable composition comprising
a) an acrylic precursor that is an at least partially polymerized reaction product of
i) a monovalent monomer mixture comprising
(1) a polar monomer having an acidic group or a salt thereof; and
(2) at least one alkyl (meth)acrylate with an alkyl group having at least 4 carbon atoms; and
ii) a thermal initiator for a free radical polymerization reaction; and
b) a crosslinker having at least two aziridinyl groups; and
2) inorganic particles suspended or dispersed in the acrylic copolymer; and
wherein the pressure-sensitive layer has a tab that extends beyond at least one of the first substrate and the second substrate, wherein pulling the tab stretches the adhesive layer and releases the adhesive layer from the first substrate, from the second substrate,
or from both the first substrate and the second substrate, wherein the pressure-sensitive adhesive layer is stretchable to at least 50 percent in a first direction without breaking when the tab is pulled.

## Patentansprüche

1. Klebeband, Folgendes umfassend:
eine Trägerschicht und
mindestens eine Haftklebstoffschicht, die anschließend an mindestens eine Hauptfläche der Trägerschicht angeordnet ist, wobei die Haftklebstoffschicht Folgendes umfasst:
1) ein Acrylcopolymer, umfassend ein vernetztes Reaktionsprodukt einer härtbaren Zusammensetzung, umfassend
a) einen Acryl-Vorläufer, der ein wenigstens teilweise polymerisiertes Reaktionsprodukt ist von
i) einem einwertigen Monomergemisch, umfassend
(1) ein polares Monomer mit einer Säure-Gruppe oder einem Salz davon, und
(2) mindestens ein Alkyl-(meth)acrylat mit einer Alkylgruppe mit mindestens 4 Kohlenstoffatomen; und
ii) einen Wärmeaktivator für eine radikalische Polymerisationsreaktion; und
b) einen Vernetzer mit mindestens zwei Aziridinylgruppen; und
2) in dem Acrylcopolymer suspendierte oder dispergierte anorganische Partikel,
wobei das Klebeband um mindestens 50 Prozent in eine erste Richtung dehnbar ist, ohne zu reißen.

2. Klebeband nach Anspruch 1, wobei die Trägerschicht ein Poly(alkylen)-Copolymer umfasst.

3. Klebeband nach Anspruch 2, wobei das Poly(alkylen)-Copolymer ein polymer-siertes Reaktionsprodukt eines Alkengemisches ist, umfassend 1) ein erstes Alken, ausgewählt aus Ethen, Propen oder einem Gemisch darvon, und 2) ein zweites Alken, ausgewählt aus einem 1,2-Alken mit 4 bis 8 Kohlenstoffatomen.

4. Klebeband nach Anspruch 1 oder 2, wobei das Klebeband die Trägerschicht, eine erste Haftklebstoffschicht anschließend an eine erste Hauptfläche der Trägerschicht und eine zweite Haftklebstoffschicht anschließend an eine zweite Hauptfläche der Trägerschicht umfasst.

5. Klebeband nach einem der Ansprüche 1 bis 4, wobei die anorganischen Partikel Siliciumdioxid umfassen.

6. Klebeband nach einem der Ansprüche 1 bis 5, wobei die anorganischen Partikel in einer Menge im Bereich von 1 bis 25 Gewichtsprozent basierend auf einem Gewicht des Acrylcopolymers vorhanden sind.

7. Klebeband nach einem der Ansprüche 1 bis 6, wobei die Trägerschicht einen polymeren Schaum umfasst.

8. Klebeband nach einem der Ansprüche 1 bis 7, ferner umfassend ein erstes Trennpapier anschließend an die erste Haftklebstoffschicht gegenüber der Trägerschicht und ein zweites Trennpapier anschließend an die zweite Haftklebstoffschicht gegenüber der Trägerschicht.

9. Klebeband nach einem der Ansprüche 1 bis 8, wobei das Klebeband um mindestens 300 Prozent in die erste Richtung dehnbar ist, ohne zu reißen.

10. Gegenstand, Folgendes umfassend:
ein erstes Substrat,
ein zweites Substrat und
ein zwischen dem ersten und dem zweiten Substrat angeordnetes Klebeband, wobei das Klebeband das erste Substrat mit dem zweiten Substrat koppelt, wobei das Klebeband Folgendes umfasst:
A) eine Trägerschicht;
B) eine erste Haftklebstoffschicht, die an eine erste Hauptfläche der Trägerschicht anschließt, und eine zweite Haftklebstoffschicht, die an eine zweite Hauptfläche der Trägerschicht anschließt, wobei die erste Haftklebstoffschicht und die zweite Haftklebstoffschicht jeweils Folgendes umfassen:
1) ein Acrylcopolymer, umfassend ein vernetztes Reaktionsprodukt einer härtbaren Zusammensetzung, umfassend
a) einen Acryl-Vorläufer, der ein wenigstens teilweise polymerisiertes Reaktionsprodukt ist von
i) einem einwertigen Monomergemisch, umfassend
(1) ein polares Monomer mit einer Säure-Gruppe oder einem Salz davon; und
(2) mindestens ein Alkyl-(meth)acrylat mit einer Alkylgruppe mit mindestens 4 Kohlenstoffatomen; und
ii) einen Wärmeaktivator für eine radikalische Polymerisationsreaktion; und
b) einen Vernetzer mit mindestens zwei Aziridinylgruppen; und
2) in dem Acrylcopolymer suspendierte oder dispergierte anorganische Partikel; und
C) eine Lasche, die sich über mindestens eines des ersten und des zweiten Substrats hinaus erstreckt, wobei Ziehen der Lasche das Klebeband dehnt und von dem ersten Substrat, von dem zweiten Substrat oder sowohl von dem ersten als auch dem zweiten Substrat gelöst wird, wobei das Klebeband um mindestens 50 Prozent in eine erste Richtung dehnbar ist, ohne zu reißen, wenn an der Lasche gezogen wird.

11. Gegenstand nach Anspruch 10, wobei die Trägerschicht einen polymeren Schaum oder einen polymeren Film umfasst.

12. Gegenstand nach Anspruch 10 oder 11, wobei die Trägerschicht ein Poly-(alkylen)-Copolymer umfasst, das ein polymerisiertes Reaktionsprodukt eines Alkengemisches ist, umfassend 1) ein erstes Alken, ausgewählt aus Ethen, Propen oder einem Gemisch darvon, und 2) ein zweites Alken, ausgewählt aus einem 1,2-Alken mit 4 bis 8 Kohlenstoffatomen.

13. Gegenstand, Folgendes umfassend:
ein erstes Substrat,
ein Klebeband, das an einem ersten Substrat haftet, wobei das Klebeband Folgendes umfasst:
A) eine Trägerschicht;
B) eine Haftklebstoffschicht, die an eine erste Hauptoberfläche der Trägerschicht anschließt, wobei die Haftklebstoffschicht Folgendes umfasst:
1) ein Acrylcopolymer, umfassend ein vernetztes Reaktionsprodukt einer härtbaren Zusammensetzung, umfassend
a) einen Acryl-Vorläufer, der ein wenigstens teilweise polymerisiertes Reaktionsprodukt ist von
i) einem einwertigen Monomergemisch, umfassend
(1) ein polares Monomer mit einer Säure-Gruppe oder einem Salz davon, und
(2) mindestens ein Alkyl-(meth)acrylat mit einer Alkylgruppe mit mindestens 4 Kohlenstoffatomen und
ii) einen Wärmeaktivator für eine radikalische Polymerisationsreaktion; und
b) einen Vernetzer mit mindestens zwei Aziridinylgruppen; und
2) im Acrylcopolymer suspendierte oder dispergierte anorganische Partikel und
C) eine Lasche, die sich über das erste Substrat hinaus erstreckt wobei das Klebeband um mindestens 50 Prozent in eine erste Richtung dehnbar ist, ohne zu reißen, wenn an der Lasche gezogen wird.

14. Gegenstand, Folgendes umfassend:
ein erstes Substrat,
ein zweites Substrat und
eine zwischen dem ersten und dem zweiten Substrat positionierte Haftklebstoffschicht, wobei die Haftklebstoffschicht das erste Substrat mit dem zweiten Substrat koppelt, wobei die Haftklebstoffschicht Folgendes umfasst:
1) ein Acrylcopolymer, umfassend ein vernetztes Reaktionsprodukt einer härtbaren Zusammensetzung, umfassend
a) einen Acryl-Vorläufer, der ein wenigstens teilweise polymerisiertes Reaktionsprodukt ist von
i) einem einwertigen Monomergemisch, umfassend
(1) ein polares Monomer mit einer Säure-Gruppe oder einem Salz davon, und
(2) mindestens ein Alkyl-(meth)acrylat mit einer Allylgruppe mit mindestens 4 Kohlenstoffatomen und
ii) einen Wärmeaktivator für eine radikalische Polymerisationsreaktion und
b) einen Vernetzer mit mindestens zwei Aziridinylgruppen; und
2) im Acrylcopolymer suspendierte oder dispergierte anorganische Partikel und
wobei die Haftklebstoffschicht eine Lasche aufweist, die sich mindestens über eines des ersten und des zweiten Substrat hinaus erstreckt, wobei das Ziehen der Lasche die Klebeschicht dehnt und die Kleberschicht vom ersten Substrat, vom zweiten Substrat oder von sowohl dem ersten Substrat als auch dem zweiten Substrat, gelöst wird, wobei die Haftklebstoffschicht um mindestens 50 Prozent in eine erste Richtung dehnbar ist, ohne zu reißen, wenn an der Lasche gezogen wird.

## Revendications

1. Ruban adhésif comprenant :
une couche de soutien ; et
au moins une couche d'adhésif sensible à la pression positionnée adjacente à au moins une surface principale de la couche de soutien, où la couche d'adhésif sensible à la pression comprend
1) un copolymère acrylique comprenant un produit de réaction réticulé d'une composition durcissable comprenant
a) un précurseur d'acrylique qui est un produit de réaction au moins partiellement polymérisé de
i) un mélange de monomères monovalents comprenant
(1) un monomère polaire comportant un groupe acide ou un sel de celui-ci ; et
(2) au moins un (méth)acrylate d'alkyle avec un groupe alkyle comportant au moins 4 atomes de carbone ; et
ii) un initiateur thermique pour une réaction de polymérisation par radicaux libres ; et
b) un agent de réticulation comportant au moins deux groupes aziridinyle ; et
2) des particules inorganiques en suspension ou dispersées dans le copolymère acrylique,
où le ruban adhésif est étirable d'au moins 50 pour cent dans une première direction sans rupture.

2. Ruban adhésif selon la revendication 1, où la couche de soutien comprend un copolymère poly(alkylène).

3. Ruban adhésif selon la revendication 2, où le copolymère poly(alkylène) est un produit de réaction polymérisé d'un mélange d'alcènes comprenant 1) un premier alcène choisi parmi l'éthène, le propène, ou un mélange de ceux-ci et 2) un deuxième alcène choisi parmi un 1,2-alcène comportant 4 à 8 atomes de carbone.

4. Ruban adhésif selon la revendication 1 ou 2, où le ruban adhésif comprend la couche de soutien, une première couche d'adhésif sensible à la pression adjacente à une première surface principale de la couche de soutien, et une deuxième couche d'adhésif sensible à la pression adjacente à une deuxième surface principale de la couche de soutien.

5. Ruban adhésif selon l'une quelconque des revendications 1 à 4, où les particules inorganiques comprennent de la silice.

6. Ruban adhésif selon l'une quelconque des revendications 1 à 5, où les particules inorganiques sont présentes en une quantité dans la plage de 1 à 25 pour cent en poids sur base d'un poids du copolymère acrylique.

7. Ruban adhésif de l'une quelconque des revendications 1 à 6, où la couche de soutien comprend une mousse polymère.

8. Ruban adhésif selon l'une quelconque des revendications 1 à 7, comprenant en outre une première protection détachable adjacente à la première couche d'adhésif sensible à la pression opposée à la couche de soutien et une deuxième protection détachable adjacente à la deuxième couche d'adhésif sensible à la pression opposée à la couche de soutien.

9. Ruban adhésif selon l'une quelconque des revendications 1 à 8, où le ruban adhésif est étirable d'au moins 300 pour cent dans la première direction sans rupture.

10. Article comprenant :
un premier substrat ;
un deuxième substrat ; et
un ruban adhésif positionné entre le premier substrat et le deuxième substrat, où le ruban adhésif couple le premier substrat au deuxième substrat, le ruban adhésif comprenant
A) une couche de soutien ;
B) une première couche d'adhésif sensible à la pression qui est adjacente à une première surface principale de la couche de soutien et une deuxième couche d'adhésif sensible à la pression qui est adjacente à une deuxième surface principale de la couche de soutien, où la première couche d'adhésif sensible à la pression et la deuxième couche d'adhésif sensible à la pression comprennent chacune
1) un copolymère acrylique comprenant un produit de réaction réticulé d'une composition durcissable comprenant
a) un précurseur d'acrylique qui est un produit de réaction au moins partiellement polymérisé de
i) un mélange de monomères monovalents comprenant
(1) un monomère polaire comportant un groupe acide ou un sel de celui-ci ; et
(2) au moins un (méth)acrylate d'alkyle avec un groupe alkyle comportant au moins 4 atomes de carbone ; et
ii) un initiateur thermique pour une réaction de polymérisation par radicaux libres ; et
b) un agent de réticulation comportant au moins deux groupes aziridinyle ; et
2) des particules inorganiques en suspension ou dispersées dans le copolymère acrylique ; et
C) une languette qui s'étend au-delà d'au moins un parmi le premier substrat et le deuxième substrat, où une traction sur la languette étire le ruban adhésif et libère le ruban adhésif du premier substrat, du deuxième substrat, ou de l'un et l'autre du premier substrat et du deuxième substrat, où le ruban adhésif est étirable à au moins 50 pour cent dans une première direction sans se rompre lorsque la languette est tirée.

11. Article selon la revendication 10, où la couche de soutien comprend une mousse polymère ou un film polymère.

12. Article selon la revendication 10 ou 11, où la couche de soutien comprend un copolymère poly(alkylène) qui est un produit de réaction polymérisé d'un mélange d'alcènes comprenant 1) un premier alcène choisi parmi l'éthène, le propène, ou un mélange de ceux-ci et 2) un deuxième alcène choisi parmi un 1,2-alcène comportant 4 à 8 atomes de carbone.

13. Article comprenant :
un premier substrat ;
un ruban adhésif mis en adhésion au premier substrat, le ruban adhésif comprenant
A) une couche de soutien ;
B) une couche d'adhésif sensible à la pression qui est adjacente à une première surface principale de la couche de soutien, où la couche d'adhésif sensible à la pression comprend
1) un copolymère acrylique comprenant un produit de réaction réticulé d'une composition durcissable comprenant
a) un précurseur d'acrylique qui est un produit de réaction au moins partiellement polymérisé de
i) un mélange de monomères monovalents comprenant
(1) un monomère polaire comportant un groupe acide ou un sel de celui-ci ; et
(2) au moins un (méth)acrylate d'alkyle avec un groupe alkyle comportant au moins 4 atomes de carbone ; et
ii) un initiateur thermique pour une réaction de polymérisation par radicaux libres ; et
b) un agent de réticulation comportant au moins deux groupes aziridinyle ; et
2) des particules inorganiques en suspension ou dispersées dans le copolymère acrylique ; et
C) une languette qui s'étend au-delà du premier substrat, où le ruban adhésif est étirable à au moins 50 pour cent dans une première direction sans rompre lorsque la languette est tirée.

14. Article comprenant :
un premier substrat ;
un deuxième substrat ; et
une couche d'adhésif sensible à la pression positionnée entre le premier substrat et le deuxième substrat, où la couche d'adhésif sensible à la pression couple le premier substrat au deuxième substrat, la couche d'adhésif sensible à la pression comprenant
1) un copolymère acrylique comprenant un produit de réaction réticulé d'une composition durcissable comprenant
a) un précurseur d'acrylique qui est un produit de réaction au moins partiellement polymérisé de
i) un mélange de monomères monovalents comprenant
(1) un monomère polaire comportant un groupe acide ou un sel de celui-ci ; et
(2) au moins un (méth)acrylate d'alkyle avec un groupe alkyle comportant au moins 4 atomes de carbone ; et
ii) un initiateur thermique pour une réaction de polymérisation par radicaux libres ; et
b) un agent de réticulation comportant au moins deux groupes aziridinyle ; et
2) des particules inorganiques en suspension ou dispersées dans le copolymère acrylique ; et
où la couche sensible à la pression a une languette qui s'étend au-delà d'au moins un parmi le premier substrat et le deuxième substrat, où une traction de la languette étire la couche adhésive et libère la couche adhésive du premier substrat, du deuxième substrat, ou de l'un et l'autre du premier substrat et du deuxième substrat, où la couche d'adhésif sensible à la pression est étirable à au moins 50 pour cent dans une première direction sans rompre lorsque la languette est tirée.
